# EUROPEAN PATENT APPLICATION

(11) **EP 2 320 159 A1**
(43) Date of publication of application: **11.05.2011**
(21) Application number: 09802642.0
(22) Date of filing: 02.07.2009
(51) Int. Cl.: F25B 1/00, F25B 31/00

(54) **REFRIGERATING DEVICE**

(30) Priority: 31.07.2008 JP 2008198113; 27.02.2009 JP 2009046660
(71) Applicant: Daikin Industries, Ltd., Osaka-shi, Osaka 530-8323 (JP)
(72) Inventor: TAKEGAMI, Masaaki, Sakai-shi Osaka 591-8511 (JP); SAKAE, Satoru, Sakai-shi Osaka 591-8511 (JP); TAKEUCHI, Ryuuji, Sakai-shi Osaka 591-8511 (JP); KONDOU, Azuma, Sakai-shi Osaka 591-8511 (JP)
(74) Representative: HOFFMANN EITLE
(86) International application number: PCT/JP2009/003070
(87) International publication number: WO 2010/013392

(57) **Abstract**

A refrigerating apparatus having a plurality of compressors includes an injection circuit (40) which includes a first injection pipe (37) branched from a first refrigerant pipe (32) of a refrigerant circuit (10) and branch injection pipes (37a, 37b, 37c) branched from the first injection pipe (37), a subcooling pressure-reducing valve (29) provided to the first injection pipe (37), and flow rate adjusting valves (30a, 30b, 30c) provided to the branch injection pipes (37a, 37b, 37c), respectively, thereby providing an appropriate refrigerant injection to each of the compressors.

## Description

### TECHNICAL FIELD

The present invention relates to refrigerating apparatuses having a plurality of compressors and performing a vapor compression refrigeration cycle, especially relates to refrigerating apparatuses which include an injection circuit for injecting a refrigerant into each compressor.

### BACKGROUND ART

Refrigerating apparatuses having a refrigerant circuit which includes a plurality of compressors and which performs a vapor compression refrigeration cycle have been known. The refrigerating apparatuses of this type include, as shown in Patent Document 1, refrigerating apparatuses which have an injection circuit for injecting a refrigerant separated from a main pipe of the refrigerant circuit to each compressor.

One end of the injection circuit is connected to a branch pipe branched from a high pressure line of the refrigerant circuit, and the other end is branched into multiple lines each of which is connected to an intermediate port that is open to a compression chamber in the state of intermediate pressure in each compressor. A pressure-reducing valve for reducing the pressure of the refrigerant is provided to the branch pipe.

According to this structure, the refrigerants discharged from the compressors are collected together, and then flow into an outdoor heat exchanger. The discharged refrigerant is condensed in the outdoor heat exchanger, and thereafter, part of the discharged refrigerant flows into the branch pipe branched from the refrigerant circuit. The refrigerant is decompressed to a predetermined pressure by the pressure-reducing valve provided to the branch pipe. The flow of the refrigerant decompressed by the pressure-reducing valve is divided into the intermediate ports of the respective compressors, and is then injected into the compression chambers of the respective compressors through the intermediate ports.

Here, the above-described refrigerating apparatuses have a temperature sensor for detecting the temperature of a discharge pipe of each of the compressors. The degree of opening of the pressure-reducing valve is adjusted based on the amount of change in temperature of the discharge pipe per unit time that is detected by the temperature sensor, thereby making it possible to maintain the temperature of the refrigerant discharged from each compressor within a predetermined temperature range.

### CITATION LIST

### PATENT DOCUMENT

Patent Document 1: Japanese Patent Publication No. 2008-076017

### SUMMARY OF THE INVENTION

### TECHNICAL PROBLEM

However, depending on the configuration of the refrigerant circuit, the temperature of the refrigerant discharged from each compressor sometimes does not likely fall within the predetermined temperature range even if the conventional injection circuit is used.

The above phenomenon occurs, for example, in the case where at least one of the plurality of compressors of the refrigerant circuit is a variable displacement compressor, and the others are fixed displacement compressors. Now, suppose that in such a refrigerant circuit, the refrigerant in the injection circuit is being injected to each compressor, while the variable displacement compressor is operated at predetermined operation capacity, and the fixed displacement compressors are operated at fixed operation capacity. Here, the temperature of the refrigerant discharged from each compressor is in a predetermined temperature range due to the injection.

From this state, the operational frequency is decreased in order to reduce the operation capacity of the variable displacement compressor. As a result, a period of change in capacity of the compression chamber of this compressor is increased, and therefore, a period of time in which the compression chamber is in the state of intermediate pressure is increased as well. Consequently, a period of time in which the intermediate port is open to the compression chamber in the state of intermediate pressure is increased as well. Because the time in which the intermediate port is open is increased, more refrigerant in the injection circuit is likely to flow into the variable displacement compressor.

As a result, in the above injection circuit, the refrigerant decompressed by the pressure-reducing valve flows more into the variable displacement compressor, than into the fixed displacement compressors, and the temperature of the refrigerant discharged from the variable displacement compressor may be lower than the temperature of the refrigerant discharged from the fixed displacement compressors. If this happens, the temperature of the refrigerant discharged from each compressor does not likely fall within the predetermined temperature range.

Another example is the case where the plurality of compressors in the refrigerant circuit are configured to include a first compressor and a second compressor whose suction pressures are different from each other. In this case, the refrigerant circuit is provided with a first evaporator corresponding to the first compressor, and a second evaporator corresponding to the second compressor, and is configured such that the refrigerants flowing in the first evaporator and the second evaporator are evaporated at temperatures different from each other.

If the suction pressure differs between the first compressor and the second compressor as described above, the intermediate pressure in the compression chambers differs as well. Thus, the refrigerant decompressed by the pressure-reducing valve tends to be suctioned more into the compressor having a lower pressure in the compression chamber in the state of intermediate pressure, than into the compressor having a higher pressure in the compression chamber in the state of intermediate pressure. As a result, the temperature of the refrigerant discharged from the compressor having a lower intermediate pressure may become lower than the temperature of the refrigerant discharged from the compressor having a higher intermediate pressure. If this happens, the temperature of the refrigerant discharged from each compressor does not likely fall within the predetermined temperature range.

As described above, in the above injection circuit, the amount of refrigerant decompressed by the pressure-reducing valve and flowing into the compressors may be unbalanced between the compressors, depending on the configuration or operating condition of the refrigerant circuit.

The present invention was made in view of the above problems, and it is an objective of the invention to provide an appropriate refrigerant injection for each compressor in a refrigerating apparatus having a plurality of compressors.

### SOLUTION TO THE PROBLEM

The first aspect of the present invention is intended for a refrigerating apparatus including: a refrigerant circuit (10) which has a plurality of compressors (21a, 21b, 21c) and which performs a vapor compression refrigeration cycle; an injection circuit (40) which has a main pipe (37) branched from a high pressure line (33) of the refrigerant circuit (10) and branch pipes (37a, 37b, 37c) branched from the main pipe (37), and in which the branch pipes (37a, 37b, 37c) are connected to intermediate ports (5, 6, 7) of the compressors (21a, 21b, 21c), respectively; and a pressure-reducing mechanism (29) provided to the main pipe (37) of the injection circuit (40).

In the refrigerant circuit (10), at least one of the plurality of compressors (21a, 21b, 21c) is a variable displacement compressor (21a), and a flow rate adjusting mechanism (30a, 30b, 30c) is provided at least to the branch pipe (37a, 37b, 37c) of the variable displacement compressor (21a). Here, the intermediate ports (5, 6, 7) are provided to the compressors (21a, 21b, 21c) so as to be open to the compression chambers in the state of intermediate pressure.

According to the first aspect of the present invention, part of the high pressure refrigerant flowing in the high pressure line (high pressure pipe) (33) of the refrigerant circuit (10) is separated to flow into the main pipe (37). The high pressure refrigerant having flowed into the main pipe (37) is decompressed by the pressure-reducing mechanism (29), and is then separated to flow into the branch pipes (37a, 37b, 37c). The flow rate of the refrigerant having flowed into the branch pipes (37a, 37b, 37c) is adjusted by the flow rate adjusting mechanisms (30a, 30b, 30c), and then the refrigerant passes through the intermediate ports (5, 6, 7) to be injected to the compression chambers.

Thus, in such a case as described above in which at least one of the plurality of compressors (21a, 21b, 21c) is a variable displacement compressor (21a) and the other compressors are fixed displacement compressors (21b, 21c), if the operation capacity of the variable displacement compressor (21a) is reduced, the degree of opening of the flow rate adjusting mechanism (30a) which corresponds to the variable displacement compressor (21a) is reduced, thereby making it possible to prevent the refrigerant from being injected into the variable displacement compressor (21a) in a large amount.

Further, if the suction pressure of the variable displacement compressor (21a) of the plurality of compressors (21a, 21 b, 21c) becomes lower than the suction pressures of the other compressors (21b, 21c), the degree of opening of the flow rate adjusting mechanism (30a) which corresponds to the variable displacement compressor (21a) is reduced, thereby making it possible to prevent the refrigerant from being injected into the variable displacement compressor (21a) in a large amount.

The second aspect of the present invention is that in the first aspect of the present invention, the flow rate adjusting mechanism (30a, 30b, 30c) is provided to each of the branch pipes (37a, 37b, 37c) of the injection circuit (40).

According to the second aspect of the present invention, the flow rate adjusting mechanism (30a, 30b, 30c) is provided to all of the branch pipes (37a, 37b, 37c). Thus, for example, if the suction pressure of the compressor (21a) of the plurality of compressors (21a, 21 b, 21c) becomes lower than the suction pressures of the other compressors (21b, 21c), the degree of opening of the flow rate adjusting mechanism (30a) which corresponds to the compressor (21 a) having the lower suction pressure is reduced, thereby making it possible to prevent the refrigerant from being injected in a large amount into the compressor (21a) having the lower suction pressure.

The third aspect of the present invention includes, in the first or second aspect of the present invention, a subcooling heat exchanger (28) having a reduced-pressure side flow path (28b) through which a refrigerant decompressed by the pressure-reducing mechanism (29) flows and a high pressure side flow path (28a) through which a high pressure refrigerant of the refrigerant circuit (10) flows, wherein the reduced-pressure side flow path (28b) is connected to the main pipe (37) of the injection circuit (40), and the high pressure side flow path (28a) is connected to the high pressure line (33) of the refrigerant circuit (10).

According to the third aspect of the present invention, the refrigerant decompressed by the pressure-reducing mechanism (29) can be injected into the compression chambers (21a, 2 1 b, 21c) after being heat exchanged with the high pressure refrigerant flowing in the refrigerant circuit (10) by the subcooling heat exchanger (28).

The fourth aspect of the present invention includes, in any one of the first to third aspects of the present invention, oil separators (38a, 38b, 38c) respectively provided to discharge pipes (22a, 22b, 22c) of the compressors (21a, 21b, 21c), for separating a refrigerating machine oil from a discharge refrigerant discharged from the compressors (21a, 21b, 21c); oil discharge pipes (39a, 39b, 39c) connected to the oil separators (38a, 38b, 38c); and an oil return circuit (39) of which one end side is connected to the oil discharge pipes (39a, 39b, 39c) and of which the other end side is connected to a branch pipe branched from the injection circuit (40), for returning the refrigerating machine oil from the oil discharge pipes (39a, 39b, 39c) to the compressors (21a, 21b, 21c).

According to the fourth aspect of the present invention, the refrigerating machine oil separated from the discharge refrigerant by the oil separators (38a, 38b, 38c) can be returned, through the injection circuit (40), to the compression chambers of the compressors (21a, 21b, 21c) in the state of intermediate pressure.

The fifth aspect of the present invention is that, in any one of the first to fourth aspects of the present invention, the flow rate adjusting mechanism (30a, 30b, 30c) is a flow rate adjusting valve whose degree of opening is variable.

According to the fifth aspect of the present invention, the flow rate adjusting mechanism (30a, 30b, 30c) is a flow rate adjusting valve. Thus, the degree of opening of the valve can be freely changed from a fully opened state to a fully closed state.

The sixth aspect of the present invention is that, in any one of the first to fifth aspects of the present invention, the flow rate adjusting mechanism (30a, 30b, 30c) is an on/off valve. Here, reducing the degree of opening of the flow rate adjusting mechanism (30a, 30b, 30c) means closing the on/off valve. Increasing the degree of opening means opening the on/off valve.

According to the sixth aspect of the present invention, the flow rate adjusting mechanism (30a, 30b, 30c) is an on/off valve. Thus, the structure of the flow rate adjusting mechanism (30a, 30b, 30c) can be simplified, and therefore the cost can be reduced, compared to the case in which the flow rate adjusting mechanism (30a, 30b, 30c) is a flow rate adjusting valve, for example.

The seventh aspect of the present invention is that, in any one of the first to sixth aspects of the present invention, the plurality of compressors (21a, 21b, 21c) include a variable displacement compressor (21a) and a fixed displacement compressor (21b, 21c), and the flow rate adjusting mechanism (30a) provided to the branch pipe (37a) connected to the intermediate port (5) of the variable displacement compressor (21a) is a flow rate adjusting valve whose degree of opening is variable, and the flow rate adjusting mechanism (30b, 30c) provided to the branch pipe (37b, 37c) connected to the intermediate port (6, 7) of the fixed displacement compressor (21 b, 21c) is an on/off valve.

According to the seventh aspect of the present invention, an injection amount of the variable displacement compressor (21a) can be adjusted by the flow rate adjusting valve, and an injection amount of the fixed displacement compressor (21b, 21c) can be adjusted by the on/off valve.

The eighth aspect of the present invention includes, in any one of the first to seventh aspects of the present invention, a discharge refrigerant temperature detection mechanism (61) for detecting a temperature of a discharge refrigerant discharged from the compressors (21a, 21b, 21c), and a control mechanism (9) for adjusting a degree of opening of each of the flow rate adjusting mechanisms (30a, 30b, 30c) such that a value detected by the discharge refrigerant temperature detection mechanism (61) falls within a predetermined temperature range.

According to the eighth aspect of the present invention, if a refrigerant discharged from any of the plurality of compressors (21a, 21b, 21c) has a temperature higher than a predetermined temperature range, the degree of opening of the flow rate adjusting mechanism (30a, 30b, 30c) which corresponds to that compressor (21a, 21b, 21c) is increased, thereby making it possible to increase the injection amount of the compressor (21a, 21b, 21c). As a result, it is possible to reduce the temperature of the discharge refrigerant to a temperature within the predetermined temperature range.

Further, if a refrigerant discharged from any of the compressors (21a, 21b, 21c) has a temperature lower than the predetermined temperature range, the degree of opening of the flow rate adjusting mechanism (30a, 30b, 30c) which corresponds to that compressor (21a, 21b, 21c) is reduced, thereby making it possible to reduce the injection amount of the compressor (21a, 21b, 21c). As a result, it is possible to increase the temperature of the discharge refrigerant to a temperature within the predetermined temperature range.

The ninth aspect of the present invention includes, in any one of the third to seventh aspects of the present invention, a discharge condition detection mechanism (61, 66) for detecting at least one of a discharge temperature and a discharge superheat of each of the compressors (21a, 21b, 21c), a discharge condition setting mechanism (76) for setting a discharge target value Tm for the at least one of the discharge temperature and the discharge superheat of each of the compressors (21a, 21b, 21c), an intermediate superheat detection mechanism (75) for detecting a superheat of an intermediate-pressure refrigerant having passed through the reduced-pressure side flow path (28b) of the subcooling heat exchanger (28), an intermediate superheat setting mechanism (77) for setting an intermediate superheat target value Tgshm for the superheat of the intermediate-pressure refrigerant having passed through the reduced-pressure side flow path (28b) of the subcooling heat exchanger (28), a first discharge target control section (56a) for changing a degree of opening of the pressure-reducing mechanism (29) such that a maximum detection value Ttd, which is a maximum value among values Td detected by the discharge condition detection mechanisms (61, 66) for the respective compressors (21a, 21b, 21c), becomes the discharge target value Tm, Tdshm, an intermediate superheat control section (60) for changing the degree of opening of the pressure-reducing mechanism (29) such that a value Tgsh detected by the intermediate superheat detection mechanism (75) becomes the intermediate superheat target value Tgshm, and a first control section (16) for exerting control, if a refrigerant condition value of the refrigerant in the refrigerant circuit (10) is in a predetermined range, by selecting the first discharge target control section (56a) or the intermediate superheat control section (60) based on the refrigerant condition value.

Here, the discharge condition setting mechanism (76) sets, as the discharge target value Tm, an appropriate value which does not cause the compressors (21a, 21b, 21c) to perform a relatively excessive superheat operation or wet operation. Further, the intermediate superheat setting mechanism (77) sets, as the intermediate superheat target value Tgshm, an appropriate value which does not cause the intermediate-pressure refrigerant having passed through the reduced-pressure side flow path (28b) of the subcooling heat exchanger (28) to be in a relatively excessive superheat condition or wet condition. The predetermined range of the refrigerant condition value is set within a range which does not make the compressors (21a, 21b, 21c) perform an abnormal operation.

According to the ninth aspect of the present invention, the first discharge target control section (56a) or the intermediate superheat control section (60) is selected by the first control section (16) if the refrigerant condition value of the refrigerant circuit (10) is in the predetermined range, that is, if the compressors (21a, 21b, 21c) are not operating abnormally. If the first discharge target control section (56a) is selected, the degree of opening of the pressure-reducing mechanism (29) is changed such that a discharge temperature or a discharge superheat of each of the compressors (21a, 21b, 21c) can be maintained constant at a target value. If the intermediate superheat control section (60) is selected, the degree of opening of the pressure-reducing mechanism (29) is changed such that a superheat of the intermediate-pressure refrigerant in the reduced-pressure side flow path (28b) of the subcooling heat exchanger (28) can be maintained constant at a target value.

The tenth aspect of the present invention is that, in the ninth aspect of the present invention, the first control section (16) is configured to exert control by selecting the first discharge target control section (56a) if the maximum detection value Ttd of the discharge condition detection mechanism (61, 66) is larger than the discharge target value Tm.

According to the tenth aspect of the present invention, if the maximum detection value Ttd of the discharge condition detection mechanism (61, 66) is larger than the discharge target value Tm, that is, if one of the plurality of compressors (21a, 21b, 21c) is in an excessive superheat operation, the degree of opening of the pressure-reducing mechanism (29) is changed by the first discharge target control section (56a). As a result, the discharge temperature or the discharge superheat of the compressors (21 a, 21 b, 21c) can be maintained at an appropriate value.

The eleventh aspect of the present invention is that, in the ninth or tenth aspect of the present invention, the first control section (16) is configured to exert control by selecting the intermediate superheat control section (60) if the maximum detection value Ttd of the discharge condition detection mechanism (61, 66) is equal to or smaller than the discharge target value Tm.

According to the eleventh aspect of the present invention, if the maximum detection value Ttd of the discharge condition detection mechanism (61, 66) is equal to or smaller than the discharge target value Tm, that is, if all of the compressors (21a, 21b, 21c) are not performing a relatively excessive superheat operation, the degree of opening of the pressure-reducing mechanism (29) is changed by the intermediate superheat control section (60). As a result, the superheat of the intermediate-pressure refrigerant in the reduced-pressure side flow path (28b) of the subcooling heat exchanger (28) can be maintained at an appropriate value.

The twelfth aspect of the present invention is that, in any one of the ninth to eleventh aspects of the present invention, the first control section (16) is configured to exert control by selecting the intermediate superheat control section (60) if the maximum detection value Ttd of the discharge condition detection mechanism (61, 66) continues to decrease during a predetermined time t1.

According to the twelfth aspect of the present invention, if the maximum detection value Ttd of the discharge condition detection mechanism (61, 66) continues to decrease during a predetermined time t1, that is, for example, if one of the plurality of compressors (21a, 21b, 21c) is performing a relatively excessive superheat operation and the excessive superheat operation is changing to a wet operation, the degree of opening of the pressure-reducing mechanism (29) is changed by the intermediate superheat control section (60) regardless of the operating condition of the one of the compressors (21a, 21b, 21c). As a result, it is possible to start the operation of the intermediate superheat control section earlier.

The thirteenth aspect of the present invention includes, in any one of the ninth to the twelfth aspects of the present invention, a first superheat avoidance control section (78a) for having the degree of opening of the pressure-reducing mechanism (29) greater than the present degree of opening of the pressure-reducing mechanism (29), a first wet avoidance control section (79a) for having the degree of opening of the pressure-reducing mechanism (29) smaller than the present degree of opening of the pressure-reducing mechanism (29), and an avoidance control section (58) for exerting control, if the refrigerant condition value of the refrigerant in the refrigerant circuit (10) exceeds the predetermined range, by selecting the first superheat avoidance control section (78a) or the first wet avoidance control section (79a) until the refrigerant condition value is in the predetermined range.

According to the thirteenth aspect of the present invention, if the refrigerant condition value exceeds a predetermined range, that is, if the compressors (21a, 21 b, 21c) are operating abnormally, the pressure-reducing mechanism (29) is controlled by the avoidance control section (58) until the refrigerant condition value is in the predetermined range. As a result, it is possible to prevent the refrigerating apparatus from continuously performing an abnormal operation. Thus, if the refrigerant condition value of the refrigerant circuit (10) is in the predetermined range, the pressure-reducing mechanism (29) is controlled by the first control section (16). If the refrigerant condition value exceeds the predetermined range, the pressure-reducing mechanism (29) is controlled by the avoidance control section (58).

The fourteenth aspect of the present invention is that, in the thirteenth aspect of the present invention, the avoidance control section (58) is configured to exert control by selecting the first superheat avoidance control section (78a) in at least one of the cases where the value Td detected by the discharge condition detection mechanism (61, 66) is even larger than an upper threshold value Tdmax set larger than the discharge target value Tm, and where the value Tgsh detected by the intermediate superheat detection mechanism (75) is even larger than an upper threshold value Tgshmax set larger than the intermediate superheat target value Tgshm.

Here, at least one of the value Td detected by the discharge condition detection mechanism (61, 66) and the value Tgsh detected by the intermediate superheat detection mechanism (75) is used as a refrigerant condition value of the refrigerant circuit (10). Further, an upper threshold value Tdmax, Tgshmax set even larger than the target value Tm corresponding to the detected value Td, Tgsh is used as a maximum value of the refrigerant condition value within a predetermined range.

According to the fourteenth aspect of the present invention, the degree of opening of the pressure-reducing mechanism (29) is forced to increase by being adjusted by the first superheat avoidance control section (78a), if the compressors (21 a, 21 b, 21 c) start to perform an abnormal superheat operation when the discharge temperature or the discharge superheat as the refrigerant condition value increases too much and the detected value Td, Tgsh exceeds the upper threshold value Tdmax, Tgshmax.

The fifteenth aspect of the present invention is that, in the thirteen or fourteenth aspect of the present invention, the avoidance control section (58) is configured to exert control by selecting the first wet avoidance control section (79a) in at least one of the cases where the value Td detected by the discharge condition detection mechanism (61, 66) is even smaller than a lower threshold value Tdmin set smaller than the discharge target value Tm, and where the value Tgsh detected by the intermediate superheat detection mechanism (75) is even smaller than a lower threshold value Tgshmin set smaller than the intermediate superheat target value Tgshm.

Here, similar to the fourteenth aspect of the present invention, at least one of the value Td detected by the discharge condition detection mechanism (61, 66) and the value Tgsh detected by the intermediate superheat detection mechanism (75) is used as a refrigerant condition value of the refrigerant circuit (10). Further, a lower threshold value Tdmin, Tgshmin set even smaller than the target value Tdm, Tgshm corresponding to the detected value Td, Tgsh is used as a minimum value of the refrigerant condition value within a predetermined range.

According to the fifteenth aspect of the present invention, the degree of opening of the pressure-reducing mechanism (29) is forced to decrease by being adjusted by the first wet avoidance control section (79a), if the compressors (21a, 21b, 21c) start to perform an abnormal wet operation when the discharge temperature or the discharge superheat as the refrigerant condition value decreases too much and the detected value Td, Tgsh becomes lower than the lower threshold value Tdmin, Tgshmin.

The sixteenth aspect of the present invention includes, in any one of the ninth to fifteenth aspects of the present invention, a second control section (17) for changing a degree of opening of the flow rate adjusting mechanism (30a, 30b, 30c) such that the values Td detected by the discharge condition detection mechanisms (61, 66) for the respective compressors (21 a, 21 b, 21 c) are approximate to each other.

According to the sixteenth aspect of the present invention, the discharge temperatures or the discharge superheats of the compressors (21a, 21b, 21c) can be approximate to one another.

The seventeenth aspect of the present invention is that, in any one of the third to seventh aspects of the present invention, the plurality of compressors (21a, 21b, 21c) include a first compressor (21a, 21b) and a second compressor (21c), a low pressure line of the refrigerant circuit (10) includes a first low pressure line (102) for connecting between a suction side of the first compressor (21a, 21b) and a cooling heat exchanger (53b, 81) which is provided in the refrigerant circuit (10) and which provides cooling for a storage room, and a second low pressure line (101) for connecting between a suction side of the second compressor (21c) and an air-conditioning heat exchanger (53a) which is provided in the refrigerant circuit (10) and which provides air conditioning for an indoor space; the refrigerating apparatus includes low-level pressure detection mechanisms (120, 121) for detecting a pressure of a low pressure refrigerant flowing in each of the first and second low pressure lines (102, 101), an intermediate pressure detection mechanism (71) for detecting a pressure of an intermediate-pressure refrigerant having been decompressed by the pressure-reducing mechanism (29), an intermediate superheat detection mechanism (75) for detecting a superheat of the intermediate-pressure refrigerant having passed through the reduced-pressure side flow path (28b) of the subcooling heat exchanger (28), and an intermediate superheat setting mechanism (77) for setting an intermediate superheat target value Tgshm for the superheat of the intermediate-pressure refrigerant having passed through the reduced-pressure side flow path (28b) of the subcooling heat exchanger (28); and the refrigerating apparatus includes an intermediate pressure control section (59) for changing a degree of opening of the pressure-reducing mechanism (29) such that a value MP detected by the intermediate pressure detection mechanism (71) becomes larger than values LP of the low pressure lines (102, 101) detected by the low-level pressure detection mechanisms (120, 121), an intermediate superheat control section (60) for changing the degree of opening of the pressure-reducing mechanism (29) such that a value Tgsh detected by the intermediate superheat detection mechanism (75) becomes the intermediate superheat target value Tgshm, and a third control section (18) for exerting control by selecting the intermediate pressure control section (59) or the intermediate superheat control section (60), based on an operating condition of the plurality of compressors (21a, 21b, 21c).

In general, the evaporation temperature of the cooling heat exchanger (53b, 81) is lower than the evaporation temperature of the air-conditioning heat exchanger (53a). Thus, the pressure of the low pressure refrigerant flowing in the first low pressure line (102) is lower than the pressure of the low pressure refrigerant flowing in the second low pressure line (101).

Further, similar to the eighth aspect of the present invention, the intermediate superheat setting mechanism (77) sets, as the intermediate superheat target value Tgshm, an appropriate value which does not cause the intermediate-pressure refrigerant having passed through the reduced-pressure side flow path (28b) of the subcooling heat exchanger (28) to be in a relatively excessive superheat condition or wet condition.

According to the seventeenth aspect of the present invention, the intermediate pressure control section (59) or the intermediate superheat control section (60) is selected based on the operating condition of the compressors (21a, 21b, 21c). If the intermediate pressure control section (59) is selected, the pressure of the injection circuit (40) is controlled to always be a pressure higher than the pressures of the first and second low pressure lines (102, 101). If the intermediate superheat control section (60) is selected, the superheat of the intermediate-pressure refrigerant of the reduced-pressure side flow path (28b) of the subcooling heat exchanger (28) is controlled to be constant at a target value.

The eighteenth aspect of the present invention is that, in the seventeenth aspect of the present invention, the third control section (18) is configured to exert control by selecting the intermediate pressure control section (59) if the first compressor (21a, 21b) and the second compressor (21c) are activated together.

Here, if the first compressor (21a, 21b) and the second compressor (21c) are activated together, the pressure of the low pressure refrigerant flowing in the first low pressure line (102) is lower than the pressure of the low pressure refrigerant flowing in the second low pressure line (101). Also, the suction pressure of the first compressor (21 a, 21b) is lower than the suction pressure of the second compressor (21c). Thus, the pressure at the intermediate port of the first compressor (21 a, 21b) is also lower than the pressure at the intermediate port of the second compressor (21c).

Accordingly, the low pressure refrigerant suctioned into the second compressor (2 1 c) through the second low pressure line (101) may flow out through the intermediate port (7) of the second compressor (21c) in the middle of the compression process in the second compressor (21c), and may flow back to the intermediate port (5, 6) of the first compressor (21 a, 21b) via the injection circuit (40).

According to the eighteenth aspect of the present invention, if the first compressor (21a, 21b) and the second compressor (21c) are activated together, the degree of opening of the pressure-reducing mechanism (29) is changed by the intermediate pressure control section (59), thereby controlling the pressure of the injection circuit (40) to always be a pressure higher than the pressure of the first and second low pressure lines. Thus, the backflow of the refrigerant from the second compressor (21c) to the first compressor (21a, 21b) as described above can be avoided.

The nineteenth aspect of the present invention is that in the seventeenth or eighteenth aspect of the present invention, the third control section (18) is configured to exert control by selecting the intermediate superheat control section (60) if one of the first compressor (21a, 21b) and the second compressor (21c) is actuated.

Here, if one of the first compressor (21a, 21b) and the second compressor (21c) is activated, the backflow of the refrigerant from the second compressor (21c) to the first compressor (21a, 21b) as described above does not occur.

According to the nineteenth aspect of the present invention, it is not necessary to consider the backflow of the refrigerant from the second compressor (21c) to the first compressor (21a, 21b) if one of the first compressor (21a, 21b) and the second compressor (21c) is activated, and therefore, the degree of opening of the pressure-reducing mechanism (29) is adjusted by the intermediate superheat control section (60). As a result, the superheat of the intermediate-pressure refrigerant of the reduced-pressure side flow path (28b) of the subcooling heat exchanger (28) can be maintained at an appropriate value.

The twentieth aspect of the present invention includes, in any one of the seventeenth to nineteenth aspects of the present invention, a discharge condition detection mechanism (61, 66) for detecting at least one of a discharge temperature and a discharge superheat of each of the compressors (21a, 21b, 21c), and a discharge condition setting mechanism (76) for setting a discharge target value Tm for the at least one of the discharge temperature and the discharge superheat of each of the compressors (21a, 21b, 21c); a second discharge target control section (56b) for changing a degree of opening of the flow rate adjusting mechanism (30a, 30b, 30c) such that a value Td detected by the discharge condition detection mechanism (61, 66) becomes the discharge target value Tm; a second superheat avoidance control section (78b) for having the degree of opening of the flow rate adjusting mechanism (30a, 30b, 30c) greater than the present degree of opening of the flow rate adjusting mechanism (30a, 30b, 30c); a second wet avoidance control section (79b) for having the degree of opening of the flow rate adjusting mechanism (30a, 30b, 30c) smaller than the present degree of opening of the flow rate adjusting mechanism (30a, 30b, 30c); and a fourth control section (19) for exerting control by selecting the second discharge target control section (56b) if a refrigerant condition value of the refrigerant in the refrigerant circuit (10) is in a predetermined range, and selecting the second superheat avoidance control section (78b) or the second wet avoidance control section (79b) if the refrigerant condition value exceeds the predetermined range.

Here, the discharge condition setting mechanism (76) sets, as the discharge target value Tm, an appropriate value which does not cause the compressors (21a, 21b, 21c) to perform a relatively excessive superheat operation or wet operation.

According to the twentieth aspect of the present invention, one of the three control sections (i.e., the second discharge target control section (56b), the second superheat avoidance control section (78b), and the second wet avoidance control section (79b)) is selected based on the refrigerant condition value of the refrigerant circuit (10).

If the second discharge target control section (56b) is selected, the discharge temperature or the discharge superheat of each of the compressors (21a, 21b, 21c) is controlled to be constant at a target value. If the second superheat avoidance control section (78b) is selected, the degree of opening of the flow rate adjusting mechanism (30a, 30b, 30c) is controlled to be greater than the present degree of opening thereof. If the second wet avoidance control section (79b) is selected, the degree of opening of the flow rate adjusting mechanism (30a, 30b, 30c) is controlled to be smaller than the present degree of opening thereof.

The twenty-first aspect of the present invention is that, in the twentieth aspect of the present invention, the fourth control section (19) is configured to exert control by selecting the second superheat avoidance control section (78b) in at least one of the cases where the value Td detected by the discharge condition detection mechanism (61, 66) is even larger than an upper threshold value Tdmax set larger than the discharge target value Tm, or where the value Tgsh detected by the intermediate superheat detection mechanism (75) is even larger than an upper threshold value Tgshmax set larger than the intermediate superheat target value Tgshm.

Here, at least one of the value Td detected by the discharge condition detection mechanism (61, 66) and the value Tgsh detected by the intermediate superheat detection mechanism (75) is used as a refrigerant condition value of the refrigerant circuit (10). Further, an upper threshold value Tdmax, Tgshmax set even larger than the target value Tm corresponding to the detected value Td, Tgsh is used as a maximum value of the refrigerant condition value within a predetermined range.

According to the twenty-first aspect of the present invention, if any of the compressors (21a, 21b, 21c) starts to perform an abnormal superheat operation when a discharge temperature or a discharge superheat as the refrigerant condition value increases too much and the detected value Td or the detected value Tgsh exceeds the upper threshold value Tdmax or Tgshmax, the degree of opening of the flow rate adjusting valve (30a, 30b, 30c) corresponding to the compressor (21 a, 21b, 21c) that performs the abnormal superheat operation is forced to increase by being adjusted by the second superheat avoidance control section (78b).

The twenty-second aspect of the present invention is that, in the twentieth or twenty-first aspect of the present invention, the fourth control section (19) is configured to exert control by selecting the second wet avoidance control section (79b) in at least one of the cases where the value Td detected by the discharge condition detection mechanism (61, 66) is even smaller than a lower threshold value Tdmin set smaller than the discharge target value Tm, or where the value Tgsh detected by the intermediate superheat detection mechanism (75) is even smaller than a lower threshold value Tgshmin set smaller than the intermediate superheat target value Tgshm.

Here, a lower threshold value Tdmin, Tgshmin set even smaller than the target value Tm corresponding to the detected value Td, Tgsh is used as a minimum value of the refrigerant condition value within a predetermined range.

According to the twenty-second aspect of the present invention, if any of the compressors (21a, 21b, 21c) starts to perform an abnormal wet operation when a discharge temperature or a discharge superheat as the refrigerant condition value decreases too much and the detected value Td or the detected value Tgsh becomes lower than the lower threshold value Tdmin or Tgshmin, the degree of opening of the flow rate adjusting valve (30a, 30b, 30c) corresponding to the compressor (21a, 21b, 21c) that performs the abnormal wet operation is forced to decrease by being adjusted by the second wet avoidance control section (79b).

The twenty-third aspect of the present invention is that, in any one of the twentieth to the twenty-second aspects of the present invention, the fourth control section (19) is configured to exert control by selecting the second discharge target control section (56b) if the value Td detected by the discharge condition detection mechanism (61, 66) is equal to or larger than a lower threshold value Tdmin set smaller than the discharge target value Tm, and equal to or smaller than an upper threshold value Tdmax set larger than the discharge target value Tm.

According to the twenty-third aspect of the present invention, the degree of opening of the flow rate adjusting valve (30a, 30b, 30c) corresponding to the compressor (21a, 21b, 21c) of which the discharge temperature or the discharge superheat as the refrigerant condition value is in a predetermined range, is changed by the second discharge target control section (56b).

### ADVANTAGES OF THE INVENTION

According to the present invention, the flow rate of the refrigerant flowing in each of the branch pipes (37a, 37b, 37c) after being decompressed by the pressure-reducing mechanism (29) can be adjusted for each of the compressors (21a, 21b, 21c) by the flow rate adjusting mechanism (30a, 30b, 30c). As a result, an appropriate injection into the compressor (21a, 21b, 21c) can be performed.

According to the second aspect of the present invention, the flow rate adjusting mechanism (30a, 30b, 30c) is provided to all of the branch pipes (37a, 37b, 37c). Therefore, it is possible to adjust the degree of opening of the flow rate adjusting mechanism (30a, 30b, 30c) selected according to the operating condition of the refrigerating apparatus. As a result, an appropriate injection into the compressor (21a, 21b, 21c) corresponding to the selected flow rate adjusting mechanism (30a, 30b, 30c) can be performed.

According to the third aspect of the present invention, it is possible to increase the degree of subcooling of the high pressure refrigerant, while injection to the compressors (21a, 21b, 21c) is being performed. Thus, the injection to the plurality of compressors (21 a, 21 b, 21c) can be achieved, while improving the COP of the refrigerating apparatus (1) more than in the case where the subcooling heat exchanger (28) is not provided.

According to the fourth aspect of the present invention, it is possible to return the refrigerating machine oil to the compressors (21 a, 21b, 21 c), while the refrigerant is being injected to the compressors (21a, 21b, 21c) via the injection circuit (40).

According to the fifth aspect of the present invention, the flow rate adjusting mechanism (30a, 30b, 30c) is a flow rate adjusting valve. Thus, the degree of opening of the valve can be freely changed from a fully opened state to a fully closed state. As a result, the amount of the refrigerant passing through the valve can be adjusted with accuracy. Thus, a more appropriate injection to the compressors (21a, 21b, 21c) can be achieved.

According to the sixth aspect of the present invention, the flow rate adjusting mechanism (30a, 30b, 30c) is an on/off valve. Thus, the structure of the flow rate adjusting mechanism (30a, 30b, 30c) can be simplified, compared to the case in which the flow rate adjusting mechanism (30a, 30b, 30c) is a flow rate adjusting valve whose degree of opening is variable. Accordingly, the injection amount of each of the compressors (21a, 21b, 21c) can be adjusted with less cost.

According to the seventh aspect of the present invention, the amount of refrigerant suctioned into the variable displacement compressor (21a) through the intermediate port (5) is changed due to change in operation capacity of the variable displacement compressor (21a), as described above. Thus, it is possible to accurately adjust the injection amount to the variable displacement compressor (21a) by the flow rate adjusting valve. On the other hand, the amount of refrigerant suctioned into the fixed displacement compressor (21b, 21c) through the intermediate port (6, 7) is not likely to be changed, compared to the amount of refrigerant suctioned into the variable displacement compressor (21a), because the operation capacity of the fixed displacement compressor (21b, 21c) is not changed. Thus, it is not necessary to accurately adjust the injection amount for the fixed displacement compressor (21b, 21c) by the flow rate adjusting valve. Accordingly, an on/off valve having a simpler structure than the flow rate adjusting valve can be used, thereby making it possible to decrease the cost of the refrigerating apparatus.

According to the eighth aspect of the present invention, the temperature of the discharge refrigerant discharged from each of the compressors (21 a, 21b, 21c) can be maintained in a predetermined temperature range, by adjusting the injection amount for each of the compressors (21 a, 21 b, 21 c) according to the temperature of the discharge refrigerant discharged from the plurality of compressors (21 a, 21b, 21c) using the control mechanism (9). As a result, a more appropriate injection to the compressors (21a, 21 b, 21 c) can be achieved.

According to the ninth aspect of the present invention, the first control section (16) can control the pressure-reducing mechanism (29) to maintain the discharge temperature or the discharge superheat of each of the compressors (21 a, 21 b, 21 c) constant at a target value, or can control the pressure-reducing mechanism (29) to maintain the superheat of the intermediate-pressure refrigerant of the reduced-pressure side flow path (28b) of the subcooling heat exchanger (28) constant at a target value. A more appropriate injection to the compressors (21 a, 21b, 21c) can be achieved by exerting these two types of control depending on the situation.

According to the tenth aspect of the present invention, if one of the plurality of compressors (21a, 21b, 21c) is in a relatively excessive superheat operation, the degree of opening of the pressure-reducing mechanism (29) is changed by the first discharge target control section (56a). As a result, the discharge temperature or the discharge superheat of the compressor (21 a, 21b, 21c) can be maintained at an appropriate value, and no compressors (21a, 21b, 21c) performs a relatively excessive superheat operation. It is thus possible to perform an appropriate injection to the compressors (21a, 21b, 21c).

According to the eleventh aspect of the present invention, if all of the compressors (21a, 21 b, 2 1 c) are not in the relatively excessive superheat operation, the degree of opening of the pressure-reducing mechanism (29) is changed by the intermediate superheat control section (60). As a result, the superheat of the intermediate-pressure refrigerant of the reduced-pressure side flow path (28b) of the subcooling heat exchanger (28) can be maintained at an appropriate value.

For example, if one of the plurality of compressors (21a, 21b, 21c) is in the relatively excessive superheat operation, the first discharge target control section (56a) according to the ninth aspect of the present invention exerts control to prevent the situation where all of the compressors (21a, 21b, 21c) are in the relatively excessive superheat operation, and thereafter, the degree of opening of the pressure-reducing mechanism (29) is changed by the intermediate superheat control section (60) according to the tenth aspect of the present invention. As a result, the superheat of the intermediate-pressure refrigerant can be maintained at an appropriate value.

According to the twelfth aspect of the present invention, if, for example, one of the plurality of compressors (21a, 21b, 21c) is performing a relatively excessive superheat operation and the excessive superheat operation is changing to a wet operation, the degree of opening of the pressure-reducing mechanism (29) is changed by the intermediate superheat control section (60) regardless of the operating condition of the one of the compressors (21a, 21b, 21c). As a result, it is possible to start the operation of the intermediate superheat control section earlier. Thus, the superheat of the intermediate-pressure refrigerant of the reduced-pressure side flow path (28b) of the subcooling heat exchanger (28) can be maintained at an appropriate value earlier.

According to the thirteenth aspect of the present invention, if the refrigerant condition value exceeds the predetermined range and the compressor (21 a, 21 b, 21c) is in an abnormal operation, the pressure-reducing mechanism (29) is controlled by the avoidance control section (58) until the refrigerant condition value is in the predetermined range. As a result, it is possible to achieve a more appropriate injection to the compressors (21 a, 21b, 21c), while preventing the refrigerating apparatus from continuously operating abnormally.

According to the fourteenth aspect of the present invention, if the discharge temperature or the discharge superheat of the compressor (21 a, 21 b, 21c) increases too much and the compressor (21 a, 21b, 21c) falls in an abnormal superheat operation, the degree of opening of the pressure-reducing mechanism (29) is forced to increase by being adjusted by the first superheat avoidance control section (78a). As a result, the amount of the intermediate-pressure refrigerant flowing through the intermediate ports (5, 6, 7) of the compressors (21a, 21b, 21 c) increases, thereby making it possible to prevent the compressors (21a, 21b, 21c) from continuously performing the abnormal superheat operation.

According to the fifteenth aspect of the present invention, if the discharge temperature or the discharge superheat of the compressor (21 a, 21 b, 21 c) decreases too much and the compressor (21 a, 21 b, 21 c) falls in an abnormal wet operation, the degree of opening of the pressure-reducing mechanism (29) is forced to decrease by being adjusted by the first wet avoidance control section (79a). As a result, the amount of the intermediate-pressure refrigerant flowing through the intermediate ports (5, 6, 7) of the compressors (21a, 21b, 21c) is reduced, thereby making it possible to prevent the compressor (21a, 21b, 21c) from continuously performing the abnormal wet operation.

According to the sixteenth aspect of the present invention, the discharge temperatures or the discharge superheats of the compressors (21a, 21b, 21c) can be approximate to one another by the second control section (17). As a result, the discharge temperatures or the discharge superheats of the plurality of compressors (21a, 21b, 21c) become approximately the same temperatures. Therefore, operation control over the refrigerating apparatus becomes easier, compared to the case where the discharge temperature or the discharge superheat is different between the compressors (21a, 2 1 b, 21c).

According to the seventeenth aspect of the present invention, the third control section (18) can control the pressure of the injection circuit (40) to always be higher than the pressures of the first and second low pressure lines (102, 10), or can control the superheat of the intermediate-pressure refrigerant of the reduced-pressure side flow path (28b) of the subcooling heat exchanger (28) to be maintained constant at a target value. A more appropriate injection to the compressors (21a, 21b, 21c) can be achieved by exerting these two types of control depending on the situation.

According to the eighteenth aspect of the present invention, if both of the first compressor (21a, 21b) and the second compressor (21c) are activated together, the degree of opening of the pressure-reducing mechanism (29) is changed by the intermediate pressure control section (59), thereby making it possible to always maintain the pressure (intermediate pressure) of the injection circuit (40) higher than the pressure (low-level pressure) of the first and second low pressure lines. Thus, the injection to the compressors (21a, 21b, 21c) can be performed while avoiding the backflow of the refrigerant from the second compressor (21c) to the first compressor (21a, 21b) as described above.

According to the nineteenth aspect of the present invention, if one of the first compressor (21a, 21b) and the second compressor (21c) is activated, no backflow of refrigerant from the second compressor (21c) to the first compressor (21 a, 21b) as described above occurs. Thus, the degree of opening of the pressure-reducing mechanism (29) is changed by the intermediate superheat control section (60), not by the intermediate pressure control section (59), thereby making it possible to achieve the injection to the compressors (21a, 21b, 21c) while maintaining the superheat of the intermediate-pressure refrigerant of the reduced-pressure side flow path (28b) of the subcooling heat exchanger (28) at an appropriate value.

According to the twentieth aspect of the present invention, the fourth control section (19) can control the discharge temperature or the discharge superheat of each of the compressors (21a, 21b, 21c) to be maintained constant at a target value, can control the degree of opening of the flow rate adjusting mechanism (30a, 30b, 30c) to be larger than the present degree of opening, or can control the degree of opening of the flow rate adjusting mechanism (30a, 30b, 30c) to be smaller than the present degree of opening. A more appropriate injection to the compressors (21a, 21b, 21c) can be achieved by exerting these three types of control depending on the situation.

According to the twenty-first aspect of the present invention, if the discharge temperature or the discharge superheat of the compressor (21 a, 21 b, 21 c) increases too much and the compressor (21 a, 21b, 21 c) starts to perform an abnormal superheat operation, the degree of opening of the flow rate adjusting valve (30a, 30b, 30c) which corresponds to the compressor (21 a, 2 1 b, 21 c) performing the abnormal superheat operation is forced to increase by the second superheat avoidance control section (78b). As a result, the amount of the intermediate-pressure refrigerant flowing through the intermediate port (5, 6, 7) of the compressor (21a, 21b, 21c) increases, thereby making it possible to prevent the abnormal superheat operation.

According to the twenty-second aspect of the present invention, if the discharge temperature or the discharge superheat of the compressor (21 a, 21 b, 21c) decreases too much and the compressor (21a, 21b, 21c) starts to perform an abnormal wet operation, the degree of opening of the flow rate adjusting valve (30a, 30b, 30c) which corresponds to the compressor (21 a, 21 b, 21 c) performing the abnormal wet operation is forced to decrease by the second wet avoidance control section (79b). As a result, the amount of the intermediate-pressure refrigerant flowing through the intermediate port (5, 6, 7) of the compressor (21a, 21b, 21c) is reduced, thereby making it possible to prevent the abnormal wet operation.

According to the twenty-third aspect of the present invention, if the discharge temperature or the discharge superheat of the compressor (21a, 21b, 21c) is in a predetermined range, the degree of opening of the flow rate adjusting valve (30a, 30b, 30c) corresponding to the compressor (21a, 21b, 21c) whose discharge temperature or the discharge superheat is in the predetermined range is changed by the second discharge target control section (56b). As a result, the amount of the intermediate-pressure refrigerant flowing through the intermediate port (5, 6, 7) of the compressor (21 a, 21b, 21c) becomes an appropriate amount, thereby making it possible to maintain the discharge temperature or the discharge superheat of the compressor (21a, 21b, 21c) at an appropriate value.

### BRIEF DESCRIPTION OF THE DRAWINGS

[FIG. 1] FIG. 1 is a circuit diagram of a refrigerant circuit of a refrigerating apparatus according to Embodiment 1.
[FIG. 2] FIG. 2 is a circuit diagram of a refrigerant circuit of a refrigerating apparatus according to Embodiment 2.
[FIG. 3] FIG. 3 is a circuit diagram of a refrigerant circuit of a refrigerating apparatus according to another embodiment.
[FIG. 4] FIG. 4 is a circuit diagram of a refrigerant circuit of a refrigerating apparatus according to a variation of Embodiment 1.
[FIG. 5] FIG. 5 is a control flow diagram of a first control section.
[FIG. 6] FIG. 6 is a control flow diagram of a first wet avoidance control section in an avoidance control section.
[FIG. 7] FIG. 7 is a control flow diagram of a first superheat avoidance control section in the avoidance control section.
[FIG. 8] FIG. 8 is a control flow diagram of a second control section.
[FIG. 9] FIG. 9 is a circuit diagram of a refrigerant circuit of a refrigerating apparatus according to a variation of Embodiment 2.
[FIG. 10] FIG. 10 is a control flow diagram of a third control section.
[FIG. 11] FIG. 11 is a control flow diagram of a fourth control section.

### DESCRIPTION OF EMBODIMENTS

Embodiments of the present invention will be described in detail hereinafter based on the drawings.

### « Embodiment 1 of the Invention»

Embodiment 1 of the present invention will be described.

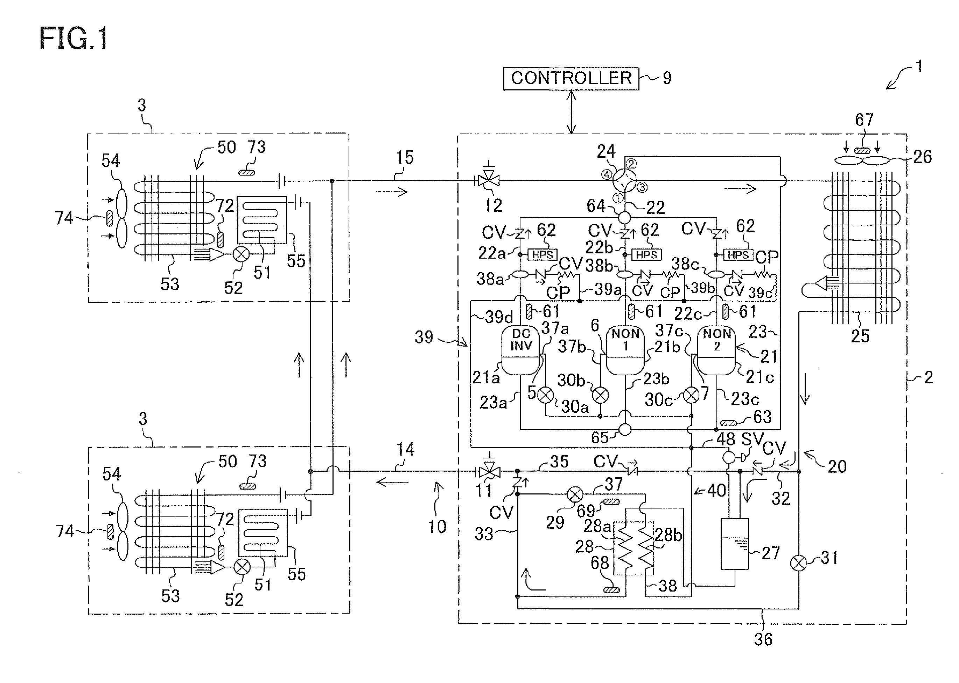

A refrigerating apparatus (1) of the present embodiment is for cooling a plurality of cold storage rooms. As shown in FIG. 1, the refrigerating apparatus (1) includes an external unit (2), a plurality of internal units (3), and a controller (9). The external unit (2) is placed outside, and each of the internal units (3) is placed in each of the cold storage rooms. Further, the external unit (2) includes an external circuit (20), and each of the internal units (3) includes an internal circuit (50). A refrigerant circuit (10) of this refrigerating apparatus (1) is configured such that the plurality of internal circuits (50) are connected in parallel to the external circuit (20), for performing a vapor compression refrigeration cycle.

Specifically, the external circuit (20) and the internal circuits (50) are connected to each other by a first communicating pipe (14) and a second communicating pipe (15). One end of the first communicating pipe (14) is connected to a first stop valve (11) provided to one end portion of the external circuit (20), and the other end of the first communicating pipe (14) is branched and connected to one end of each of the internal circuits (50). Further, one end of the second communicating pipe (15) is connected to a second stop valve (12) provided to the other end portion of the external circuit (20), and the other end of the second communicating pipe (15) is branched and connected to the other end of each of the internal circuits (50).

### <External Unit>

The external circuit (20) of the external unit (2) includes first to third, three compressors (21 a, 21b, 21c), a four-way switching valve (24), an external heat exchanger (25), a receiver (27), a subcooling heat exchanger (28), a subcooling pressure-reducing valve (a pressure-reducing mechanism) (29), and an outdoor expansion valve (31).

All the compressors (21a, 21b, 21c) are hermetically enclosed, high pressure dome type scroll compressors. Each of the compressors (21a, 21b, 21c) is provided with a compressor mechanism having a compression chamber which includes an intermediate port (5, 6, 7) that is open to the compression chamber in the state of intermediate pressure, and with an electric motor which drives the compressor mechanism.

An inverter capable of freely changing the number of revolutions of the electric motor of the first compressor (21a) within a predetermined range is connected to the electric motor of the first compressor (21a). This inverter adjusts the number of revolutions of the electric motor, thereby making it possible to increase and decrease the operation capacity of the first compressor (21a). Further, no inverter is provided to the electric motors of the second and third compressors (21b, 21c), and the number of revolutions of these electric motors is fixed. Thus, the operation capacity of the second and third compressors (21b, 21c) is constant.

Discharge pipes (discharge piping) (22a, 22b, 22c) are connected to the discharge sides of the compressors (21a, 21b, 21c), respectively. Each of the discharge pipes (22a, 22b, 22c) is provided with a check valve (CV). The discharge pipes (22a, 22b, 22c) are connected to the first port of the four-way switching valve (24) via a discharge collection pipe (22). The check valve (CV) is located in a direction which only allows the refrigerant flowing from the compressors (21a, 21b, 21c) toward the discharge collection pipe (22).

Further, oil separators (38a, 38b, 38c) are provided to the upstream sides of the check valves (CV) of the discharge pipes (22a, 22b, 22c), respectively. Each of the oil separators (38a, 38b, 38c) is for separating a refrigerating machine oil from the high pressure refrigerant in the compressors (21a, 21b, 21c). Oil discharge pipes (39a, 39b, 39c) to which the refrigerating machine oil is discharged are connected to the oil separators (38a, 38b, 38c), respectively. These three oil discharge pipes (39a, 39b, 39c) are combined together at one end of an oil discharge collection pipe (39d). The other end of the oil discharge collection pipe (39d) is connected to a portion of a second injection pipe (38) described later, at which portion a vent pipe (48) is connected to the second injection pipe (38). Each of the oil discharge pipes (39a, 39b, 39c) is provided with a check valve (CV) and a capillary tube (CP) sequentially from the oil separator (38b, 38c).

These three oil discharge pipes (39a, 39b, 39c) and the oil discharge collection pipe (39d) form an oil return circuit (39). Further, the check valves (CV) provided to the oil discharge pipes (39a, 39b, 39c) are located in a direction which only allows the refrigerating machine oil flowing toward the oil discharge collection pipe (39d).

Suction pipes (23a, 23b, 23c) are connected to the suction sides of the compressors (21a, 21b, 21c), respectively. These suction pipes (23a, 23b, 23c) are connected to the second port of the four-way switching valve (24) via a suction collection pipe (23).

One end of the external heat exchanger (25) is connected to the third port of the four-way switching valve (24), and the second stop valve (12) is connected to the fourth port of the four-way switching valve (24). The four-way switching valve (24) is capable of switching between a first state (the state as shown in solid line in FIG. 1) in which the first port and the third port communicate with each other and in which the second port and the fourth port communicate with each other, and a second state (the state as shown in broken line in FIG. 1) in which the first port and the fourth port communicate with each other and in which the second port and the third port communicate with each other.

The other end of the external heat exchanger (25) is connected to the roof of the receiver (27) via a first refrigerant pipe (32). The external heat exchanger (25) is a cross-fin type, fin and tube heat exchanger. An outdoor fan (26) is provided near the external heat exchanger (25). The external heat exchanger (25) is configured to exchange heat between an outdoor air transferred by the outdoor fan (26) and the refrigerant flowing in the external heat exchanger (25). A check valve (CV) is provided to the first refrigerant pipe (32), and the check valve (CV) is located in a direction which only allows the refrigerant flowing from the external heat exchanger (25) to the receiver (27).

The subcooling heat exchanger (28) includes a high pressure side flow path (28a) and a reduced-pressure side flow path (28b), and is configured to exchange heat between the refrigerant flowing in the high pressure side flow path (28a) and the refrigerant flowing in the reduced-pressure side flow path (28b).

The inflow end of the high pressure side flow path (28a) is connected to the bottom of the receiver (27). The outflow end of the high pressure side flow path (28a) is connected to the first stop valve (11) via a second refrigerant pipe (a high pressure line) (33). The second refrigerant pipe (33) is provided with a check valve (CV), and the check valve (CV) is located in a direction which only allows the refrigerant flowing from the subcooling heat exchanger (28) toward the first stop valve (11). On the other hand, the inflow end and the outflow end of the reduced-pressure side flow path (28b) are connected to the injection circuit (40) according to the present invention.

The injection circuit (40) is for injecting the refrigerant to each of the compressors (21a, 21b, 21c), and includes a first injection pipe (a main pipe) (37), a second injection pipe (38), and first, second and third branch injection pipes (branch pipes) (37a, 37b, 37c).

The first injection pipe (37) is branched from the second refrigerant pipe (33) at the upstream side of the check valve (CV), and is connected to the inflow end of the reduced-pressure side flow path (28b). Further, the first injection pipe (37) is provided with a subcooling pressure-reducing valve (a pressure-reducing mechanism) (29). The subcooling pressure-reducing valve (29) is an electronic expansion valve whose degree of opening is variable.

The outflow end of the reduced-pressure side flow path (28b) is connected to one end of the second injection pipe (38). The other end of the second injection pipe (38) is branched into the first, second and third branch injection pipes (37a, 37b, 37c). The first, second and third branch injection pipes (37a, 37b, 37c) are connected to the intermediate ports (5, 6, 7) of the compressors (21a, 21b, 21c), respectively.

First, second and third flow rate adjusting valves (flow rate adjusting mechanisms) (30a, 30b, 30c) are provided to the first, second and third branch injection pipes (37a, 37b, 37c), respectively. The first, second and third flow rate adjusting valves (30a, 30b, 30c) are electronic expansion valves whose degree of opening is variable.

The receiver (27) is positioned at a location between the external heat exchanger (25) and the subcooling heat exchanger (28) as described above, and is configured to be capable of temporarily storing the high pressure refrigerant condensed in the external heat exchanger (25) when the four-way switching valve (24) is in the first state. Further, one end of the vent pipe (48) having a solenoid valve (SV) is connected to the roof of the receiver (27). The other end of the vent pipe (48) is connected to a portion of the second injection pipe (38). The vent pipe (48) allows a gas refrigerant to flow from the receiver (27) to the second injection pipe (38) by opening the solenoid valve (SV).

One end of the third refrigerant pipe (35) is connected to a portion of the second refrigerant pipe (33) between the check valve (CV) and the first stop valve (11). The other end of the third refrigerant pipe (35) is connected to the first refrigerant pipe (32) at the downstream side of the check valve (CV). A check valve (CV) is provided to the third refrigerant pipe (35), and this check valve (CV) is located in a direction which only allows the refrigerant flowing from the first stop valve (11) toward the first refrigerant pipe (32).

Further, the first refrigerant pipe (32) and the second refrigerant pipe (33) are connected to each other by a fourth refrigerant pipe (36) which bypasses the receiver (27) and the subcooling heat exchanger (28). One end of the fourth refrigerant pipe (36) is connected to the first refrigerant pipe (32) at the upstream side of the check valve (CV). The other end of the fourth refrigerant pipe (36) is connected to a portion of the second refrigerant pipe (33) that is on the upstream side of the connecting portion at which the first injection pipe (37) is connected to the second refrigerant pipe (33). The outdoor expansion valve (31) is provided to the fourth refrigerant pipe (36). The outdoor expansion valve (31) is an electronic expansion valve whose degree of opening is adjustable.

The external circuit (20) includes a various kinds of sensors and pressure switches. Specifically, each of the discharge pipes (22a, 22b, 22c) is provided with a discharge pipe temperature sensor (a discharge refrigerant temperature detection mechanism) (61) and a high-level pressure switch (62). The discharge pipe temperature sensor (61) is for detecting the temperature of each of the discharge pipes (22a, 22b, 22c). The high-level pressure switch (62) is for detecting the discharge pressure, and in the case of abnormally high pressure, for immediately stopping the refrigerating apparatus (1). The suction collection pipe (23) is provided with a suction pipe temperature sensor (63) for detecting the temperature of the suction collection pipe (23).

A discharge pressure sensor (64) for detecting the discharge pressure of the compressors (21 a, 21b, 21c) is provided at a location where the discharge pipes (22a, 22b, 22c) are collected together (i.e., the inflow end of the discharge collection pipe (22)). A suction pressure sensor (65) for detecting the suction pressure of the compressors (21a, 21b, 21c) is provided at a location where the suction pipes (23a, 23b, 23c) are collected together. An outdoor air temperature sensor (67) for detecting an outdoor air temperature is provided near the outdoor fan (26).

Further, a first liquid temperature sensor (68) is provided to the second refrigerant pipe (33). A second liquid temperature sensor (69) is provided to the first injection pipe (37) at the downstream side of the subcooling pressure-reducing valve (29). Each of the liquid temperature sensors (68, 69) is for detecting the temperature of the liquid refrigerant.

### <Internal Unit>

The above two internal units (3) have the same configuration. Each internal unit (3) includes an internal circuit (50). The internal circuit (50) sequentially includes, from its one end to the other end, a pipe for heating (51), an internal expansion valve (52), and an internal heat exchanger (53).

The pipe for heating (51) is attached to a drain pan (55) located under the internal heat exchanger (53). The drain pan (55) is for collecting condensed water dropping from the internal heat exchanger (53). The pipe for heating (51) is attached to the drain pan (55) to melt ice blocks made of frozen condensed water, by utilizing heat of the high pressure refrigerant flowing in the pipe for heating (51).

The internal expansion valve (52) is an electronic expansion valve whose degree of opening is adjustable.

The internal heat exchanger (53) is a cross-fin type, fin and tube heat exchanger. An internal fan (54) is located near the internal heat exchanger (53). Further, the internal heat exchanger (53) is configured such that a refrigerant exchanges heat between the air in the storage room transferred by the internal fan (54) and the refrigerant flowing in the internal heat exchanger (53).

Further, the internal circuit (50) is provided with three temperature sensors. Specifically, an evaporation temperature sensor (72) for detecting the evaporation temperature of the refrigerant is provided to the heat exchanger pipe of the internal heat exchanger (53). A refrigerant temperature sensor (73) for detecting the temperature of the gas refrigerant is provided near the gas-side end of the internal circuit (50). An internal temperature sensor (74) for detecting the temperature in the storage room is provided near the internal fan (54).

### <Controller>

Values detected by the sensors (61-69, 71-74) and the high-level pressure switch (62) are input to the controller (control mechanism) (9). Based on these detected values, the controller (9) controls the driving of the compressors (21a, 21b, 21c) and the fans (26, 54), switches between the various types of valves (24, 29, 31, 52, SV), adjusts the degree of opening of the valves, and adjusts the operating frequency of the inverter, thereby controlling the operation of the refrigerating apparatus (1).

For example, the controller (9) adjusts the degree of opening of the first, second and third flow rate adjusting valves (30a, 30b, 30c) based on the respective discharge pipe temperature sensors (61). Specifically, the degree of opening of each of the flow rate adjusting valves (30a, 30b, 30c) is adjusted so that the temperature detected by the discharge pipe temperature sensor (61) falls within a predetermined temperature range. If a refrigerant discharged from any of the compressors (21 a, 21b, 21c) has a temperature higher than the predetermined temperature range, the degree of opening of the flow rate adjusting valve (30a, 30b, 30c) which corresponds to that compressor (21a, 21b, 21c) is increased, thereby increasing the injection amount of the compressor (21a, 21b, 21c). As a result, it is possible to reduce the temperature of the discharge refrigerant to a temperature within the predetermined temperature range.

Further, if a refrigerant discharged from any of the compressors (21a, 2 1 b, 21c) has a temperature lower than the predetermined temperature range, the degree of opening of the flow rate adjusting valve (30a, 30b, 30c) which corresponds to that compressor (21a, 21b, 21c) is reduced, thereby reducing the injection amount of the compressor (21a, 21b, 21c). As a result, it is possible to increase the temperature of the discharge refrigerant to a temperature within the predetermined temperature range.

Here, the first compressor is configured such that its operating frequency can be changed by an inverter. Thus, the temperature of the discharge refrigerant tends to be lower than the predetermined temperature range. This is because, as described above, if the operating frequency of the first compressor (21a) is reduced, the time in which the intermediate port (5) is open is extended, and therefore, the intermediate-pressure refrigerant of the injection circuit (40) is suctioned more into the first compressor (21a) by the amount corresponding to the extended time.

Thus, in the case where the operation capacity of the first compressor (21a) is reduced, the temperature of the discharge refrigerant is reduced, and according to this change in temperature, the degree of opening of the first flow rate adjusting valve (30a) is reduced. In this way, the refrigerant is prevented from being injected into the first compressor (21a) in a large amount.

### -Operational Behavior-

An operational behavior of the refrigerating apparatus (1) will be described below. The refrigerating apparatus (1) is configured to exert control by selecting a cooling operation for maintaining the interior of the cold storage room at a predetermined temperature (e.g., 5°C).

In this cooling operation, each of the internal units (3) cools the interior of the storage room by driving at least one of the three compressors (21 a, 21 b, 21 c). Here, the situation in which all of the three compressors (21a, 21b, 21c) are driven will be described. Further, in this cooling operation, the four-way switching valve (24) is set in the first state. The degree of opening of the subcooling pressure-reducing valve (29) and the degree of opening of the internal expansion valve (52) are appropriately adjusted, and the outdoor expansion valve (31) is fully closed. Each of the solenoid valves (SV) is opened or closed according to the operating condition.

In the cooling operation, the refrigerant flows in the refrigerant circuit (10) in a direction of arrow shown in solid line in FIG. 1 when the first, second, and third compressors (21a, 21b, 21c) are driven. Here, the external heat exchanger (25) serves as a condenser, and each of the internal heat exchangers (53) serves as an evaporator, thereby performing a vapor compression refrigeration cycle in the refrigerant circuit (10).

Specifically, the high-pressure gas refrigerant compressed in the first, second, and third compressors (21a, 21b, 21c) is discharged through the discharge pipes (22a, 22b, 22c). The high-pressure gas refrigerant discharged through the discharge pipes (22a, 22b, 22c) flows into the respective oil separators (38a, 38b, 38c). The oil separators (38a, 38b, 38c) separate a refrigerating machine oil from the high pressure refrigerant. The separated refrigerating machine oil is temporarily stored in the respective oil separators (38a, 38b, 38b), and then flows into the second injection pipe (38) through the oil discharge pipes (39a, 39b, 39c) and the oil discharge collection pipe (39d). The flow of the refrigerating machine oil having flowed into the second injection pipe (38) is divided to pass through the branch injection pipes (37a, 37b, 37c), and is then suctioned into the compressors (21a, 21b, 21c) through the intermediate ports (5, 6, 7).

On the other hand, the high pressure refrigerant from which the refrigerating machine oil has been separated flows out the oil separators (38a, 38b, 38c), and is collected together in the discharge collection pipe (22). The high pressure refrigerant collected together in the discharge collection pipe (22) flows into the external heat exchanger (25) through the four-way switching valve (24). In the external heat exchanger (25), the high pressure refrigerant exchanges heat with the outdoor air, and is condensed. The condensed refrigerant sequentially passes through the first refrigerant pipe (32), the receiver (27), and the high pressure side flow path (28a) of the subcooling heat exchanger (28), and then flows into the second refrigerant pipe (33). Part of the refrigerant having flowed into the second refrigerant pipe (33) flows into the first injection pipe (37), and the rest of the refrigerant flows into the first communicating pipe (14) through the first stop valve (11).

The high pressure refrigerant having flowed into the first injection pipe (37) is decompressed to a predetermined pressure by the subcooling pressure-reducing valve (29) until the refrigerant becomes an intermediate-pressure refrigerant, and thereafter, the intermediate-pressure refrigerant flows into the reduced-pressure side flow path (28b) of the subcooling heat exchanger (28). In the subcooling heat exchanger (28), the intermediate-pressure refrigerant and the high pressure refrigerant flowing in the high pressure side flow path (28a) exchange heat with each other. As a result, the high pressure refrigerant is cooled, and the degree of subcooling increases, whereas the intermediate-pressure refrigerant is heated to become a gas refrigerant. After flowing out the subcooling heat exchanger (28), the flow of the gas refrigerant is divided into the first, second and third branch injection pipes (37a, 37b, 37c) through the second injection pipe (38).

A flow rate of the intermediate-pressure refrigerant having flowed into the branch injection pipes (37a, 37b, 37c) is adjusted by the flow rate adjusting valves (30a, 30b, 30c), respectively, and then, the refrigerant is injected into the compression chamber in the state of intermediate pressure in each of the compressors (21a, 21b, 21c). Here, the controller (9) adjusts the degree of opening of each of the flow rate adjusting valves (30a, 30b, 30c) so that the temperature detected by the discharge pipe temperature sensor (61) is in the predetermined temperature range.

On the other hand, the flow of the high pressure refrigerant having flowed into the first communicating pipe (14) is divided into the internal circuits (50). The high pressure refrigerant having flowed into the internal circuits (50) flows through the pipe for heating (51). Here, at the drain pan (55), the ice blocks made of frozen condensed water is melted by the refrigerant flowing in the pipe for heating (51). Thus, the high pressure refrigerant flowing in the pipe for heating (51) is further subcooled. The high pressure refrigerant having flowed out the pipe for heating (51) is decompressed by the internal expansion valve (52) to become a low pressure refrigerant, and thereafter flows into the internal heat exchanger (53).

In the internal heat exchanger (53), the low pressure refrigerant exchanges heat with the air in the storage room, and evaporates. The air in the storage room is cooled as a result. The refrigerant evaporated in the internal heat exchanger (53) flows into the external circuit (20) again through the second communicating pipe (15). The low pressure refrigerant having flowed into the external circuit (20) flows into the suction collection pipe (23) through the four-way switching valve (24), and suctioned into the compressors (21a, 21b, 21c) from the suction pipes (23a, 23b, 23c), respectively. The low pressure refrigerant suctioned into the compressors (21a, 21b, 21c) is compressed to a predetermined pressure, together with the intermediate-pressure refrigerant having flowed from the intermediate ports (5, 6, 7), until the refrigerant becomes a high pressure refrigerant. The high pressure refrigerant is discharged again from the compressors (21a, 21b, 21c). The refrigerant circulates as described above, thereby performing a cooling operation for maintaining the interior of the cold storage room at a predetermined temperature.

Further, if the four-way switching valve (24) is switched from the first state to the second state, the refrigerant circulates in an opposite direction. As a result, the external heat exchanger (25) serves as an evaporator, and the internal heat exchanger (53) severs as a condenser, which means that a reverse cycle defrost operation can also be performed.

### -Effects of Embodiment 1-

According to the present Embodiment 1, the flow rate of the refrigerant flowing in each of the branch injection pipes (37a, 37b, 37c) after being decompressed by the subcooling pressure-reducing valve (29) can be adjusted for each of the compressors (21a, 21b, 21c) by the flow rate adjusting valves (30a, 30b, 30c). Thus, an appropriate injection to the compressors (21a, 21 b, 21c) can be performed.

Further, according to the present Embodiment 1, the control mechanism (9) adjusts the injection amount of each of the plurality of compressors (21a, 21b, 21c) according to the temperature of the refrigerant discharged from the compressors (21a, 21b, 21c), thereby making it possible to control the temperature of the refrigerant discharged from the compressors (21a, 21b, 21c) within a predetermined temperature range. As a result, an appropriate injection to the compressors (21a, 21b, 21c) can be performed with reliability.

Further, according to the present Embodiment 1, owing to the provision of the subcooling heat exchanger (28), the refrigerant decompressed by the subcooling pressure-reducing valve (29) can be injected into the compression chambers (4a, 4b, 4c), after being heat exchanged with the high pressure refrigerant flowing in the refrigerant circuit (10). Thus, the refrigerant can be injected into the plurality of compressors (21a, 21b, 21c), while improving the COP of the refrigerating apparatus (1) more than in the case where the subcooling heat exchanger (28) is not provided.

### -Variation of Embodiment 1-

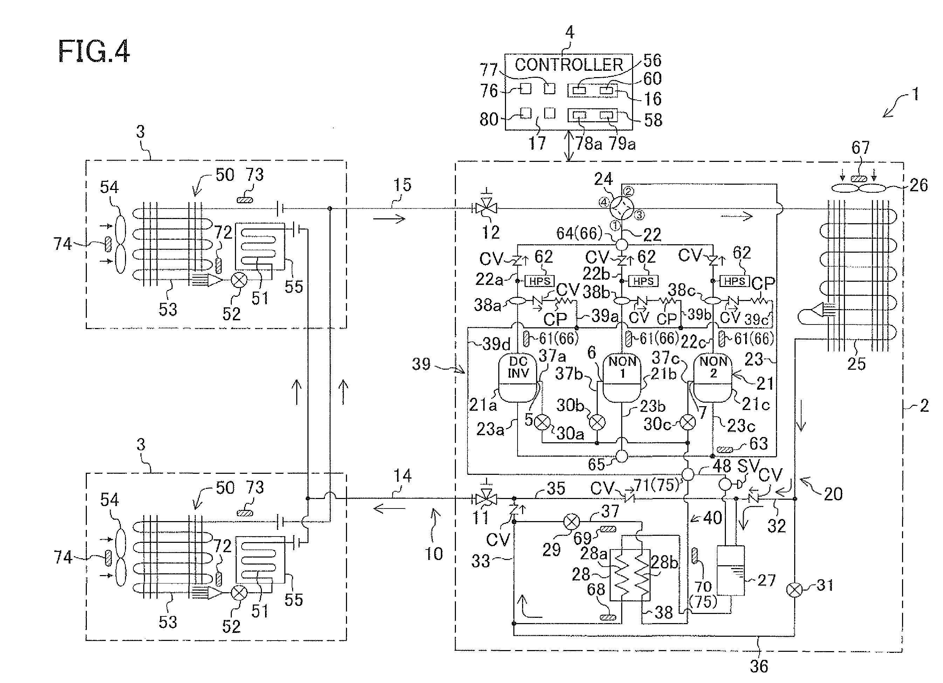

FIG. 4 shows a refrigerant circuit according to a variation of Embodiment 1. The configuration of the controller which controls the operation of the refrigerating apparatus (1) differs between Embodiment 1 and the variation. Further, the second injection pipe (38) of Variation 1 is provided with an intermediate refrigerant temperature sensor (70) for measuring a temperature of the intermediate-pressure refrigerant having passed through the reduced-pressure side flow path (28b) of the subcooling heat exchanger (28), and with an intermediate-pressure pressure sensor (71) for measuring a pressure of the intermediate-pressure refrigerant.

The controller (4) according to this variation of Embodiment 1 includes a first control section (16), an avoidance control section (58), and a second control section (17). The degree of opening of the subcooling pressure-reducing valve (29) is adjusted by the first control section (16) and the avoidance control section (58). The degree of opening of the flow rate adjusting mechanism (30a, 30b, 30c) is adjusted by the second control section (17).

Further, a discharge pipe temperature sensor (61) and a discharge pressure sensor (64) as the discharge condition detection mechanisms, and an intermediate refrigerant temperature sensor (70) and an intermediate-pressure pressure sensor (71) as the intermediate superheat detection mechanisms, are electrically connected to the controller (4). Also, the controller (4) includes a discharge condition setting section (a discharge condition setting mechanism) (76) and an intermediate superheat setting section (an intermediate superheat setting mechanism) (77). The discharge condition setting section (76) is for setting a target value Tm for the discharge temperatures of the compressors (21a, 21b, 21c). The intermediate superheat setting section (77) is for setting a target value Tgshm for the degree of superheat of the intermediate-pressure refrigerant flowing in the injection circuit (40).

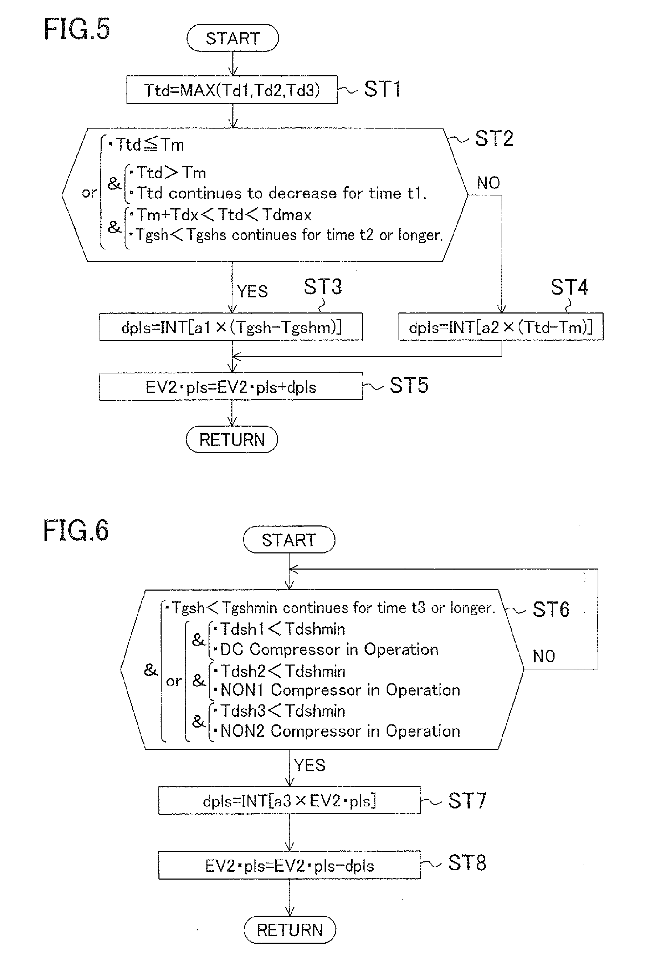

Next, a control operation of the first control section (16), the avoidance control section (58), and the second control section (17) will be described with reference to FIG. 5 to FIG. 8 showing the control flow diagram.

### <First Control Section>

The first control section (16) includes a first discharge target control section (56a) and intermediate superheat control section (60). The first control section (16) is for exerting control by selecting the first discharge target control section (56a) or the intermediate superheat control section (60), based on the discharge temperatures of the compressors (21a, 21b, 21c) and the degree of superheat of the intermediate-pressure refrigerant in the injection circuit (40).

Specifically, first, in step ST1, a maximum value among the values Td1-Td3 detected by the discharge pipe temperature sensors (61) is determined, i.e., the determined value is set as a maximum value Ttd of the discharge pipe temperature sensors (61) as shown in FIG. 5.

Then, in step ST2, whether or not any one of the first, second, and third conditions is met is determined. Here, the first condition is that the maximum value Ttd set in step ST1 is equal to or smaller than the target value Tm set by the discharge condition setting section (76) of the controller (4). The second condition is that the maximum value Ttd in step ST1 is larger than the target value Tm, and that the maximum value Ttd continues to decrease during a time t1.

The third condition is the situation in which the maximum value Ttd in step ST1 is larger than a value obtained by adding a predetermined value Tdx to the target value Tm of the discharge condition setting section (76), and in which the maximum value Ttd is smaller than an upper threshold value Tdmax that is set larger than the target value Tm, wherein the state in which a value Tgsh detected by the intermediate superheat detection section (75) is smaller than a predetermined intermediate superheat value Tgshs continues for a time t2 or longer. The upper threshold value Tdmax is set to such a value that causes the compressors (21a, 21 b, 21 c) to perform an abnormal superheat operation when the maximum value Ttd in step ST1 exceeds the threshold value Tdmax.

If any one of the first, second, and third conditions is met in step ST2, the process moves to step ST3. In step ST3, an amount dpls of change in a value of degree of opening of the subcooling pressure-reducing valve (29) is determined based on a difference between the value Tgsh of the intermediate refrigerant superheat that is detected based on the intermediate refrigerant temperature sensor (70) and the intermediate-pressure pressure sensor (71), and the target value Tgshm of the intermediate superheat setting section (77). The smaller the difference is, the smaller the amount dpls of change becomes. Next, in step ST5, a value obtained by adding the amount dpls of change determined in step ST3 to a value EV2·pls of degree of opening of the present subcooling pressure-reducing valve (29) is set as a new value EV2·pls of degree of opening. The degree of opening of the subcooling pressure-reducing valve (29) is changed to this new value EV2·pls of degree of opening.

The processes in step ST3 and step ST5 correspond to the control operation of the intermediate superheat control section (60). Due to this operation, the superheat of the intermediate-pressure refrigerant having flowed out the subcooling heat exchanger (28) can be maintained constant at the target value of the intermediate superheat setting section (77).

On the other hand, if all of the first, second, and third conditions are not met in step ST2, the process moves to step ST4. In step ST4, an amount dpls of change in a value of degree of opening of the subcooling pressure-reducing valve (29) is determined based on a difference between the maximum value Ttd in step ST1 and the target value Tm of the discharge condition setting section (76). The smaller the difference is, the smaller the amount dpls of change becomes. Next, in step ST5, a value obtained by adding the amount dpls of change determined in step ST4 to the value EV2·pls of degree of opening of the present subcooling pressure-reducing valve (29) is set as a new value EV2·pls of degree of opening. The degree of opening of the subcooling pressure-reducing valve (29) is changed to this new value EV2·pls of degree of opening.

The processes in step ST4 and step ST5 correspond to the control operation of the first discharge target control section (56a). Due to this operation, the discharge temperatures of the compressors (21a, 21b, 21c) can be maintained constant at the target value of the discharge condition setting section (76).

As described above, in the case where the operations of the compressors (21a, 21b, 21c) tend to be a superheating operation, the discharge temperature control is performed by the first discharge target control section (56a). In the case where the operations of the compressors (21a, 21b, 21c) do not tend to be a superheating operation, an intermediate superheat control is performed by the intermediate superheat control section (60).

After the completion of step ST5, the process returns to step ST1, in which the maximum value Ttd determined by the discharge pipe temperature sensor (61) is determined again. These processes in steps ST1 to ST5 are repeated. Since two types of control are implemented depending on the situation, a more appropriate injection to the compressors (21a, 21b, 21c) can be performed, compared to the case where the discharge temperature control is implemented all the time as in Embodiment 1.

### <Avoidance Control Section>

The avoidance control section (58) includes a first superheat avoidance control section (78a) and a first wet avoidance control section (79a). The avoidance control section (58) is for preventing the compressors (21a, 21b, 21c) from continuously performing an abnormal operation, such as an abnormal superheat operation or an abnormal wet operation, which is caused, for example, by change in load of the refrigerating apparatus (1), when compressors (21a, 21b, 21c) start to perform such an abnormal operation. Further, the first superheat avoidance control section (78a) performs a control operation for avoiding an abnormal superheat operation of the compressors (21a, 21b, 21c). The first wet avoidance control section (79a) performs a control operation for avoiding an abnormal wet operation of the compressors (21a, 21b, 21c).

The control operation of the first wet avoidance control section (79a) will be described first, and then, the control operation of the first superheat avoidance control section (78a) will be described.

First, as shown in FIG. 6, the first wet avoidance control section (79a) determines whether or not fourth and fifth conditions are met in step ST6. Here, the fourth condition is the following situation which continues for a time t3 or longer and in which a value Tgsh detected by the intermediate refrigerant temperature sensor (70) and the intermediate-pressure pressure sensor (71) as an intermediate refrigerant superheat is even smaller than a lower threshold value Tgshmin set smaller than the intermediate superheat target value Tgshm of the intermediate superheat setting section (77). The lower threshold value Tgshmin is set to such a value that causes the compressors (21a, 21b, 21c) to perform an abnormal wet operation when the detected value Tgsh as the intermediate refrigerant superheat becomes lower than the threshold value Tgshmin.

The fifth condition is that at least one of values Tdsh1-Tdsh3 detected by the discharge pipe temperature sensor (61) and the discharge pressure sensor (64) as a discharge superheat is even smaller than a lower threshold value Tdshmin set smaller than a discharge superheat target value Tdshm of the discharge condition setting section (76). Whether or not the compressors (21a, 21b, 21c) are performing an abnormal wet operation is determined based on the fourth and fifth conditions.

The determination process in step ST6 is repeated until both of the fourth and fifth conditions are met. When both of the fourth and fifth conditions are met, the compressors are considered as performing an abnormal wet operation, and the process moves to step ST7.

In step ST7, an amount dpls of change in a value of degree of opening of the subcooling pressure-reducing valve (29) is determined based on a value EV2·pls of degree of opening of the present subcooling pressure-reducing valve (29). Here, if the present value EV2·pls of degree of opening is large, the amount dpls of change is also large. If the present value EV2·pls of degree of opening is small, the amount dpls of change is also small.

Next, in step ST8, a value obtained by subtracting the amount dpls of change determined in step ST7 from the value EV2·pls of degree of opening of the present subcooling pressure-reducing valve (29), is set as a new value EV2·pls of degree of opening. As a result, the degree of opening of the subcooling pressure-reducing valve (29) decreases.

After the completion of step ST8, the process returns to step ST6, and whether both of the fourth and fifth conditions are met is determined again in step ST6. The processes in steps ST6 to ST8 are repeated.

As described above, the degree of opening of the subcooling pressure-reducing valve (29) is decreased, if the compressors (21a, 21b, 21c) start to perform an abnormal wet operation when the discharge temperature or the discharge superheat of each of the compressors (21a, 21b, 21c) decreases too much due to such as change in load of the refrigerating apparatus (1). As a result, the amount of the intermediate-pressure refrigerant flowing into the compressors (21a, 21b, 21c) through the intermediate ports (5, 6, 7) of the compressors (21a, 21b, 21c) is reduced, and it is possible to prevent the compressors from continuously performing the abnormal wet operation.

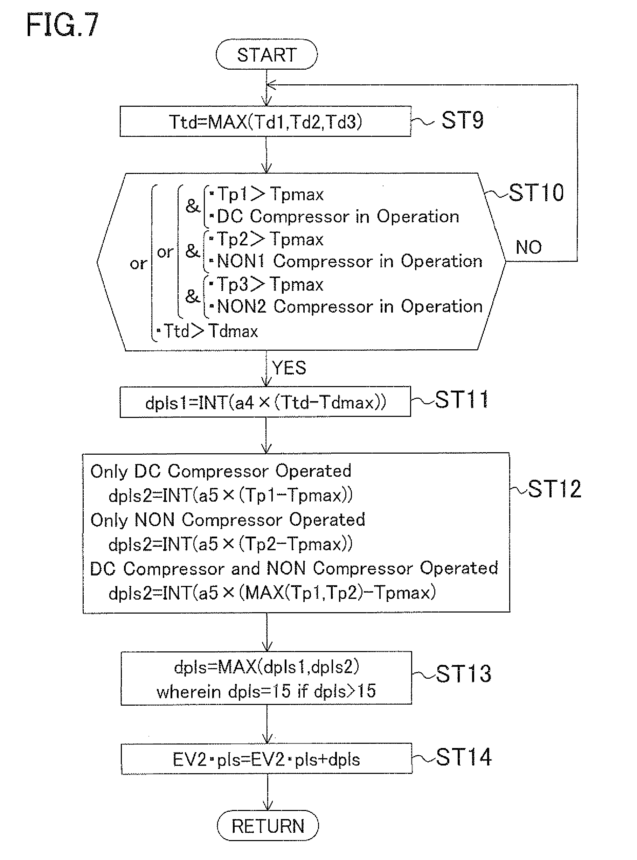

In step ST9, the first superheat avoidance control section (78a) first determines a maximum value among the values Td1-Td3 detected by the discharge pipe temperature sensors (61), i.e., the determined value is set as a maximum value Ttd of the discharge pipe temperature sensors (61) as shown in FIG. 7.

Next, in step ST10, whether or not at least one of the sixth and seventh conditions is met is determined. Here, the sixth condition is that at least one of predicted discharge temperatures of all the compressors (21a, 21b, 21c) is larger than an upper threshold value Tpmax of the predicted discharge temperature. The upper threshold value Tpmax is set to such a value that causes the compressors (21a, 21b, 21c) to perform an abnormal superheat operation when the predicted discharge temperature Tp exceeds the threshold value Tpmax.

Here, the predicted discharge temperatures of the compressors (21a, 21b, 21c) are determined by a predicted-discharge-temperature calculation section (80) provided in the controller (4). This predicted-discharge-temperature calculation section (80) is configured to calculate the predicted discharge temperatures of the compressors (21a, 21b, 21c), based on the discharge pressure, the suction pressure, and the suction temperature of the compressors (21a, 21b, 21c), assuming that the compression operation of the compressors (21a, 21b, 21c) is a polytropic compression operation.

Further, the seventh condition is that the maximum value Ttd set in step ST7 is even larger than an upper threshold value Tdmax set larger than the target value Tm of the discharge condition setting section (76). The upper threshold value Tdmax is set to such a value that causes the compressors (21 a, 21b, 21 c) to perform an abnormal superheat operation when the maximum value Ttd in step ST7 exceeds the threshold value Tdmax. Whether or not the compressors (21a, 21b, 21c) are performing an abnormal superheat operation is determined based on the sixth and seventh conditions.

The processes in step ST9 and step ST10 are repeated until at least one of the sixth and seventh conditions is met. When at least one of the sixth and seventh conditions is met, the compressors (21a, 21b, 21c) are considered as performing an abnormal superheat operation, and the process moves to step ST11.

In step ST11, a first amount dpls1 of change in a value of degree of opening of the subcooling pressure-reducing valve (29) is determined based on a difference between the maximum value Ttd in step ST9 and the upper threshold value Tdmax. The smaller the difference is, the smaller the amount dpls1 of change becomes. Next, in step ST12, a second amount dpls2 of change in a value of degree of opening of the subcooling pressure-reducing valve (29) is determined based on a difference between a value Tp determined by the predicted-discharge-temperature calculation section (80) and the upper threshold value Tpmax. The smaller the difference is, the smaller the amount dpls2 of change becomes. Here, if all of the compressors (21a, 21b, 21c) are actuated, the second amount dpls2 of change of the subcooling pressure-reducing valve (29) is determined based on a difference between a maximum value of the values Tp for the compressors (21 a, 21b, 21c) which are determined by the predicted-discharge-temperature calculation section (80) and the upper threshold value Tpmax. The smaller the difference is, the smaller the amount dpls2 of change becomes.

Next, in step ST13, a maximum value among the first amount dplsl of change determined in step ST11 and the second amount dpls2 of change determined in step ST12 is set as an amount dpls of change in a value of degree of opening of the subcooling pressure-reducing valve (29). Here, even if the amount dpls of change is larger than 15, the amount is limited to 15. The minimum value of degree of opening of the subcooling pressure-reducing valve (29) is zero (a fully closed state), and the maximum value thereof is 480 (a fully opened state).

Next, in step ST14, a value obtained by adding the amount dpls of change set in step ST13 to the value EV2·pls of degree of opening of the present subcooling pressure-reducing valve (29) is set as a new value EV2·pls of degree of opening. The degree of opening of the subcooling pressure-reducing valve (29) is changed to this new value EV2·pls of degree of opening.

After the completion of step ST14, the process returns to step ST9. In step ST9, the maximum value Ttd of each of the discharge pipe temperature sensors (61) is determined again. The processes in steps ST9 to ST14 are repeated.

As described above, the degree of opening of the subcooling pressure-reducing valve (29) is increased, if the compressors (21a, 21b, 21c) start to perform an abnormal superheat operation when the discharge temperature or the discharge superheat of each of the compressors (21 a, 21b, 21c) increases too much due to such as change in load of the refrigerating apparatus (1). As a result, the amount of the intermediate-pressure refrigerant flowing into the compressors (21a, 21b, 21c) through the intermediate ports (5, 6, 7) of the compressors (21a, 21b, 21c) is increased, and it is possible to prevent the compressors from continuously performing the abnormal superheat operation.

### <Second Control Section>

The second control section (17) is for making the discharge temperatures of the compressors (21a, 21b, 21c) approximate to each other. In the present variation, the first compressor (21a) is a variable displacement compressor, and the second and third compressors (21b, 21c) are fixed displacement compressors. Thus, the discharge temperatures of the second and third compressors (21b, 21c) may be considered approximately equal to each other. Therefore, in the second control section (17), the discharge temperature of the first compressor (21a) is controlled so as to be approximate to the discharge temperatures of the second and third compressors (21b, 21c), by adjusting the degree of opening of the first flow rate adjusting valve (30a) which corresponds to the first compressor (21a).

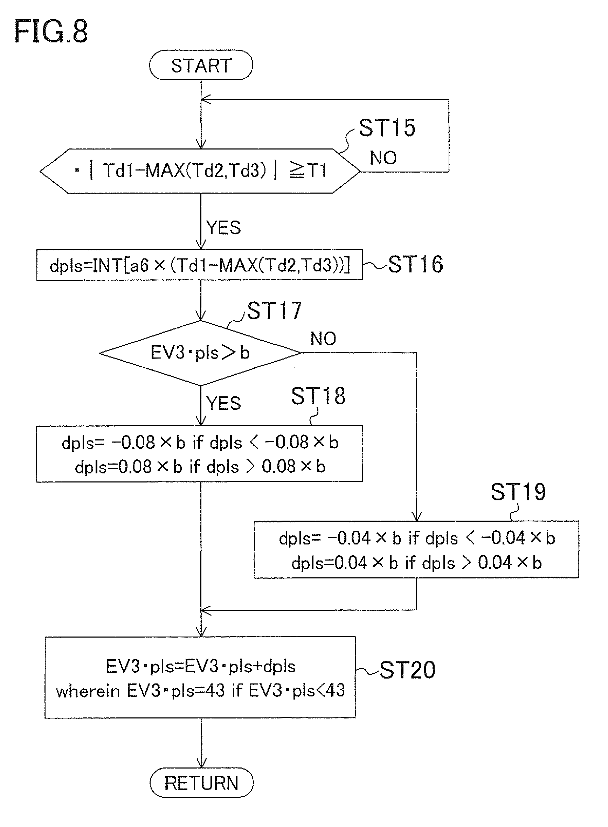

Specifically, first, in step ST15, the determination process in step ST15 is repeated until an absolute value of the difference between the value Td1 detected by the discharge pipe temperature sensor (61) of the first compressor (21a) and the maximum value among the values Td2, Td3 detected by the discharge pipe temperature sensors (61) of the second and third compressors (21b, 21c) becomes equal to or larger than a predetermined value T1, as shown in FIG. 8. When the absolute value becomes the predetermined value T1 or larger than the predetermined value T1, the process moves to step ST16 as it is considered that the difference between the discharge temperature of the first compressor (21a) and the discharge temperatures of the second and third compressors (21b, 21c) is large.

In step ST16, an amount dpls of change in a value of degree of opening of the first flow rate adjusting valve (30a) is determined based on a difference between the value Td1 detected by the discharge pipe temperature sensor (61) of the first compressor (21a) and the maximum value among the values Td2, Td3 detected by the discharge pipe temperature sensors (61) of the second and third compressors (21b, 21c). The smaller the difference is, the smaller the amount dpls of change becomes.

Next, in step ST17, whether or not the degree of opening of the present first flow rate adjusting valve (30a) is larger than a predetermined value b of degree of opening is determined. If the value of degree of opening of the first flow rate adjusting valve (30a) is larger than the predetermined value b of degree of opening, the process moves to step ST18. Otherwise, the process moves to step ST19.

In step ST18, if the amount dpls of change determined in step ST16 is smaller than -0.08 times the predetermined value b of degree of opening, the amount dpls of change is corrected to the -0.08 times the predetermined value b of degree of opening. If the amount dpls of change determined in step ST16 is larger than 0.08 times the predetermined value b of degree of opening, the amount dpls of change is corrected to 0.08 times the predetermined value b of degree of opening. That is, if the degree of opening of the first flow rate adjusting valve (30a) is large, the degree of opening of the first flow rate adjusting valve (30a) is changed in a relatively great amount. Here, the figure 0.08 is an example figure, and the figure can be set to any figure as long as the figure regulates the value of degree of opening of the first flow rate adjusting valve (30a).

In step ST19, if the amount dpls of change determined in step ST16 is smaller than -0.04 times the predetermined value b of degree of opening, the amount dpls of change is corrected to -0.04 times the predetermined value b of degree of opening. If the amount dpls of change determined in step ST16 is larger than 0.04 times the predetermine value b of degree of opening, the amount dpls of change is corrected to 0.04 times the predetermined value b of degree of opening. That is, if the degree of opening of the first flow rate adjusting valve (30a) is small, the degree of opening of the first flow rate adjusting valve (30a) is changed in a relatively small amount. Here, the figure 0.04 is an example figure, and the figure can be set to any figure as long as the figure regulates the value of degree of opening of the first flow rate adjusting valve (30a).

Next, in step ST20, a value obtained by adding the amount dpls of change corrected as necessary in step ST18 or step ST19 to the value EV3-pls of degree of opening of the present first flow rate adjusting valve (30a), is set as a new value EV3·pls of degree of opening. The degree of opening of the first flow rate adjusting valve (30a) is changed to this new value EV3·pls of degree of opening.

After the completion of step ST20, the process returns to step ST15. In step ST15, it is determined again whether or not the absolute value of the difference between the value Td1 detected by the discharge pipe temperature sensor (61) of the first compressor (21a) and the maximum value among the values Td2, Td3 detected by the discharge pipe temperature sensors (61) of the second and third compressors (21b, 21c) is equal to or larger than the predetermined value T1. The first flow rate adjusting valve (30a) is adjusted by repeating the processes in steps ST15 to ST20, thereby approximating the discharge temperature of the first compressor (21a) to the discharge temperatures of the second and third compressors (21b, 21c).

Accordingly, owing to the controller (4), it is possible to perform an appropriate injection to each of the compressors (21a, 21b, 21c), and also possible to make the discharge temperatures of the compressors (21a, 21b, 21c) uniform.

### «Embodiment 2»

A refrigerating apparatus (91) of Embodiment 2 is placed for such as convenience stores, and provides cooling for a refrigerator and a freezer, and simultaneously provides indoor air conditioning.

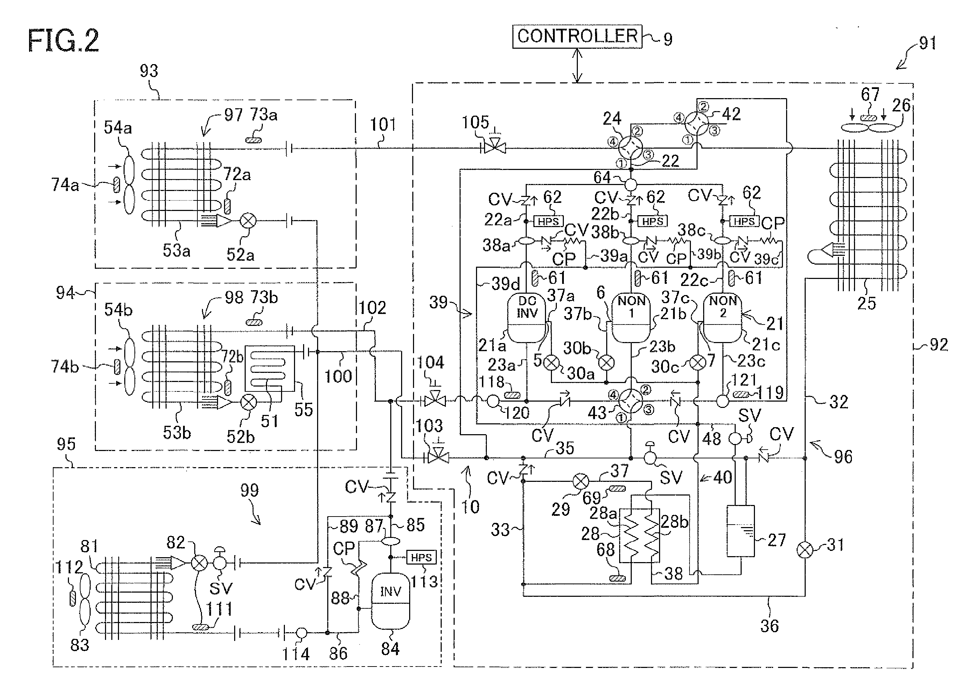

As shown in FIG. 2, the refrigerating apparatus (91) includes an external unit (92), an air-conditioning unit (93), a cooling unit (94), a refrigeration unit (95), and a controller (9).

The external unit (92) is provided with an external circuit (96). The air-conditioning unit (93) is provided with an air-conditioning circuit (97). The cooling unit (94) is provided with a cooling circuit (98). The refrigeration unit (95) is provided with a refrigeration circuit (99). According to the present embodiment, the air-conditioning circuit (97) forms a first utilization system, and the cooling circuit (98) and the refrigeration circuit (99) form a second utilization system.

In this refrigerating apparatus (91), a plurality of utilization-side circuits (97, 98, 99) are connected in parallel to the external circuit (96), thereby forming a refrigerant circuit which perform a vapor compression refrigeration cycle. The external circuit (96) is connected to the utilization-side circuits (97, 98, 99) by a fluid-side communicating pipe (100), a first gas-side communicating pipe (101), and a second gas-side communicating pipe (102). One end of the fluid-side communicating pipe (100) is connected to a fluid-side stop valve (103) of the external circuit (96). The other end of the fluid-side communicating pipe (100) is branched into three paths to be connected to the air-conditioning circuit (97), the cooling circuit (98), and the refrigeration circuit (99). One end of the first gas-side communicating pipe (101) is connected to a first gas-side stop valve (105) of the external circuit (96), and the other end of the first gas-side communicating pipe (101) is connected to the air-conditioning circuit (97). One end of the second gas-side communicating pipe (102) is connected to a second gas-side stop valve (104) of the external circuit (96). The other end of the second gas-side communicating pipe (102) is branched into two paths to be connected to the cooling circuit (98) and the refrigeration circuit (99).

Each of the units will be described in detail hereinafter. The same reference characters are given to the same portions as those in Embodiment 1, and explanation of the portions is simplified. The explanations of the air-conditioning unit (93) and the cooling unit (94) are omitted since the configurations thereof are similar to the configuration of the internal unit (3) in Embodiment 1.

### <External Unit>

The external circuit (96) of the external unit (2) includes first to third, three compressors (21a, 21 b, 2 1 c), a first four-way switching valve (24), an external heat exchanger (25), a receiver (27), a subcooling heat exchanger (28), a subcooling pressure-reducing valve (a pressure-reducing mechanism) (29), and an outdoor expansion valve (31). Further, in Embodiment 2, second and third four-way switching valves (42, 43) are provided.

The first to third, three compressors (21a, 21b, 21c) include a compressor for the first utilization system and a compressor for the second utilization system. Specifically, the first compressor (21a) is used, in principle, exclusively for the second utilization system for cooling and refrigeration, and the third compressor (21c) is used, in principle, exclusively for the first utilization system for air conditioning. On the other hand, the second compressor (21b) is switched between use for the first utilization system and use for the second utilization system, and forms one of a compressor for the first utilization system and a compressor for the second utilization system.

One end sides of the first, second, and third suction pipes (23a, 23b, 23c) are connected to the suction sides of the first, second, and third compressors (21a, 21b, 21c), respectively. The other end side of the first suction pipe (23a) is branched into two paths, one of which is connected to the second gas-side stop valve (104), and the other of which is connected to the third four-way switching valve (43). The other end side of the second suction pipe (23b) is connected to the third four-way switching valve (43). The other end side of the third suction pipe (23c) is branched into two paths, one of which is connected to the third four-way switching valve (43), and the other of which is connected to the second four-way switching valve (42).

Here, the first suction pipe (23a) is provided with a first suction pressure sensor (120). The third suction pipe (23c) is provided with a second suction pressure sensor (121). The first suction pressure sensor (120) detects a low-level pressure of the refrigeration side. The second suction pressure sensor (121) detects a low-level pressure of the air-conditioning side.

Each of the first to third, three four-way switching valves (24, 42, 43) includes first to fourth, four ports. In the first four-way switching valve (24), the first port is connected to the discharge collection pipe (22); the second port is connected to the fourth port of the second four-way switching valve (42); the third port is connected to one end side of the external heat exchanger (25); and the fourth port is connected to the first gas-side stop valve (105). In the second four-way switching valve (42), the first port is connected to the discharge collection pipe (22); the second port is connected to the third suction pipe (23c); and the third port is closed.

Both of the first four-way switching valve (24) and the second four-way switching valve (42) are capable of switching between a first state (the state as shown in solid line in FIG. 1) in which the first port and the third port communicate with each other and in which the second port and the fourth port communicate with each other, and a second state (the state as shown in broken line in FIG. 1) in which the first port and the fourth port communicate with each other and in which the second port and the third port communicate with each other.

In the third four-way switching valve (43), the first port is connected to the third refrigerant pipe (35); the second port is connected to the second suction pipe (23b); the third port is connected to the third suction pipe (23c); and the fourth port is connected to the first suction pipe (23a). Further, check valves are provided at a location between the first suction pipe (23a) and the third four-way switching valve (43), and a location between the third suction pipe (23c) and the third four-way switching valve (43). Here, in the third four-way switching valve (43), the discharge pressures of the compressors (31, 32, 33) are always applied to the first port, whereas the suction pressures of the second compressor (21b), the third compressor (21c) and the first compressor (21a) are always applied to the second port, the third port, and the fourth port, respectively.

The third four-way switching valve (43) is capable of switching between a first state (the state as shown in solid line in FIG. 1) in which the first port and the third port communicate with each other and in which the second port and the fourth port communicate with each other, and a second state (the state as shown in broken line in FIG. 1) in which the first port and the fourth port communicate with each other and in which the second port and the third port communicate with each other.

### <Refrigeration Unit>

One end (the fluid-side end) of the refrigeration circuit (99) of the refrigeration unit (95) is connected to the branched portion of the fluid-side communicating pipe (100), and the other end (the gas-side end) is connected to the branched portion of the second gas-side communicating pipe (102). The refrigeration circuit (99) includes, sequentially from the fluid-side end, a refrigeration expansion valve (82), a refrigeration heat exchanger (81), and a booster compressor (84). The refrigeration heat exchanger (81) is a cross-fin type, fin and tube heat exchanger. A refrigeration fan (83) is provided near the refrigeration heat exchanger (81). The refrigeration heat exchanger (81) exchanges heat between the refrigerant and the air in the storage room transferred by the refrigeration fan (83).

In the refrigeration circuit (99), an outlet refrigerant temperature sensor (111) is provided at the outlet side of the refrigeration heat exchanger (81). The refrigeration expansion valve (82) is a temperature sensitive valve whose degree of opening is adjusted according to the temperature detected by the outlet refrigerant temperature sensor (111). A solenoid valve (SV) capable of being opened or closed is provided near the upstream side of the refrigeration expansion valve (82). Further, an internal temperature sensor (112) for detecting a temperature of the air in the freezer is provided near the refrigeration heat exchanger (81).

The booster compressor (84) is a high pressure dome type scroll compressor, and forms a variable displacement compressor. A discharge pipe (85) of the booster compressor (84) is connected to the second gas-side communicating pipe (102), and a suction pipe (86) of the booster compressor (84) is connected to the refrigeration heat exchanger (81). The discharge pipe (85) is provided with, sequentially from the booster compressor (84) side, a high-level pressure switch (113), an oil separator (87), and a check valve (CV). The suction pipe (86) is provided with a suction pressure sensor (114) for detecting a suction pressure of the booster compressor (84). An oil return pipe (88) for returning the refrigerating machine oil separated from the refrigerant to the suction side (the suction pipe (86)) of the booster compressor (84), is connected to the oil separator (87). A capillary tube (CP) is provided to this oil return pipe (88).

Further, the refrigeration circuit (99) includes a bypass pipe (89) which connects between the suction pipe (86) and the discharge pipe (85). The bypass pipe (89) is provided with a check valve (CV). The bypass pipe (89) is configured to allow the refrigerant flowing in the suction pipe (86) to bypass the booster compressor (84) and flow into the discharge pipe (85) in the event of such as a breakdown of the booster compressor (84).

Further, in the refrigerating apparatus (91) of the present embodiment, the temperature at which the refrigerant evaporates differs between the air-conditioning circuit (97), the cooling circuit (98), and the refrigeration circuit (99). That is, the pressure at which the refrigerant evaporates differs between the air-conditioning circuit (97), the cooling circuit (98), and the refrigeration circuit (99).

Accordingly, the suction pressures of the compressors (21a, 21b, 21c) which are connected to the first utilization system or the second utilization system differ from one another. In such a case, the intermediate-pressure refrigerant in the injection circuit (40) tends to be suctioned into a compressor whose compression chamber in the state of intermediate pressure has a lower pressure. As a result, the temperature of the discharge refrigerant discharged from the compressor decreases. According to this change in temperature, the degree of opening of each of the flow rate adjusting valves (30a, 30b, 30c) is reduced. In this way, the refrigerant is prevented from being injected into the compressors (21a, 21 b, 21c) in a large amount.

### -Operational Behavior-

Next, an operational behavior of the refrigerating apparatus (91) will be described. The refrigerating apparatus (91) is capable of switching between a cooling operation in which the indoor space is cooled by the air-conditioning unit (93) while the cooling unit (94) cools the refrigerator and the refrigeration unit (95) cools the freezer, and a heating operation in which the indoor space is heated by the air-conditioning unit (93) while the cooling unit (94) cools the refrigerator and the refrigeration unit (95) cools the freezer. The cooling operation will be described below.

The cooling operation is capable of switching between a first mode in which the second compressor (21b) is used for the second utilization system for cooling and freezing, and a second mode in which the second compressor (21b) is used for the first utilization system for air conditioning.

As shown in FIG. 2, all the four-way switching valves (24, 42, 43) are set in the first state in the cooling operation of the first mode. The outdoor expansion valve (36) is set in the fully closed state. Further, the degree of opening of each of the indoor space expansion valve (52a), the cooling expansion valve (52b), and the refrigeration expansion valve (82) is appropriately adjusted. Further, each of the fans (26, 54, 83), the three compressors (21 a, 21 b, 21 c), and the booster compressor (84) are in the operating condition.

The high-pressure gas refrigerant compressed in the first, second, and third compressors (21a, 21b, 21c) is discharged through the discharge pipes (22a, 22b, 22c), respectively. The high-pressure gas refrigerant discharged through the discharge pipes (22a, 22b, 22c) flows into the respective oil separators (38a, 38b, 38c). The oil separators (38a, 38b, 38c) separate a refrigerating machine oil from the high pressure refrigerant. The separated refrigerating machine oil is temporarily stored in the respective oil separators (38a, 38b, 38c), and then flows into the second injection pipe (38) through the oil discharge pipes (39a, 39b, 39c) and the oil discharge collection pipe (39d). The flow of the refrigerating machine oil having flowed into the second injection pipe (38) is divided to pass through the branch injection pipes (a, 37b, 37c), and is then suctioned into the compressors (21a, 21b, 21c) through the intermediate ports (5, 6, 7).

On the other hand, the high pressure refrigerant from which the refrigerating machine oil has been separated flows out the oil separators (38a, 38b, 38c), and is collected together in the discharge collection pipe (22). The high pressure refrigerant collected together in the discharge collection pipe (22) flows into the external heat exchanger (25) through the first and second four-way switching valves (24, 42). In the external heat exchanger (25), the high pressure refrigerant exchanges heat with the outdoor air, and is condensed. The condensed refrigerant sequentially passes through the first refrigerant pipe (32), the receiver (27), and the high pressure side flow path (28a) of the subcooling heat exchanger (28), and then flows into the second refrigerant pipe (33). Part of the refrigerant having flowed into the second refrigerant pipe (33) flows into the first injection pipe (37), and the rest of the refrigerant flows into the fluid-side communicating pipe (100) through the first stop valve (11).

The high pressure refrigerant having flowed into the first injection pipe (37) is decompressed to a predetermined pressure by the subcooling pressure-reducing valve (29) until the refrigerant becomes an intermediate-pressure refrigerant, and thereafter, the intermediate-pressure refrigerant flows into the reduced-pressure side flow path (28b) of the subcooling heat exchanger (28). In the subcooling heat exchanger (28), the intermediate-pressure refrigerant and the high pressure refrigerant flowing in the high pressure side flow path (28a) exchange heat with each other. As a result, the high pressure refrigerant is cooled, and the degree of subcooling increases, whereas the intermediate-pressure refrigerant is heated to become a gas refrigerant. After flowing out the subcooling heat exchanger (28), the flow of the gas refrigerant is divided into the first, second and third branch injection pipes (37a, 37b, 37c) through the second injection pipe (38).

A flow rate of the intermediate-pressure refrigerant having flowed into the branch injection pipes (37a, 37b, 37c) is adjusted by the flow rate adjusting valves (30a, 30b, 30c), respectively, and then, the refrigerant is injected into the compression chamber in the state of intermediate pressure in each of the compressors (21a, 21b, 21c). Here, the controller (9) adjusts the degree of opening of each of the flow rate adjusting valves (30a, 30b, 30c) so that the temperature detected by the discharge pipe temperature sensor (61) is in the predetermined temperature range.

On the other hand, the flow of the liquid refrigerant having flowed into the fluid-side communicating pipe (100) is divided into the air-conditioning circuit (97), the cooling circuit (98), and the refrigeration circuit (99).

The high pressure refrigerant having flowed into the air-conditioning circuit (97) is decompressed by the indoor space expansion valve (52), and then flows into the indoor space heat exchanger (53). In the indoor space heat exchanger (53), the refrigerant absorbs heat from the indoor air, and evaporates. As a result, the indoor air is cooled, thereby providing cooling for the inside of the store. The refrigerant evaporated in the indoor space heat exchanger (53) is suctioned into the third compressor (21c) through the third suction pipe (23c), after sequentially passing through the first gas-side communicating pipe (101), the first four-way switching valve (24), and the second four-way switching valve (42).

The refrigerant having flowed into the cooling circuit (98) passes through the pipe for heating (51). Here, at refrigerant drain pan (55), the ice blocks made of frozen condensed water is melted by the refrigerant flowing in the pipe for heating (51). Thus, the high pressure refrigerant flowing in the pipe for heating (51) is further subcooled. The high pressure refrigerant having flowed out the pipe for heating (51) is decompressed by the cooling expansion valve (52), and thereafter, flows into a cooling heat exchanger (81). In the cooling heat exchanger (81), the refrigerant absorbs heat from the air in the refrigerator, and evaporates. As a result, the inside of the refrigerator is cooled. According to the cooling unit (94), the temperature in the refrigerator is maintained at 5°C, for example. The refrigerant evaporated in the cooling heat exchanger (81) flows into the second gas-side communicating pipe (102).

The refrigerant having flowed into the refrigeration circuit (99) is decompressed by the refrigeration expansion valve (82), and then flows into the refrigeration heat exchanger (81). In the refrigeration heat exchanger (81), the refrigerant absorbs heat from the air in the freezer, and evaporates. As a result, the inside of the freezer is cooled. According to the refrigeration unit (95), the temperature in the freezer is maintained at -10°C, for example. The refrigerant evaporated in the refrigeration heat exchanger (81) is compressed by the booster compressor (84), and thereafter, flows into the second gas-side communicating pipe (102) to be merged with the refrigerant flowing from the cooling circuit (98). The refrigerant merged together flows into the first suction pipe (106), and part of the refrigerant is suctioned into the first compressor (21 a), and the rest of the refrigerant is suctioned into the second compressor (21b) through the second suction pipe (107), after passing through a third connection pipe (49c) and the third four-way switching valve (43).

The cooling operation of the second mode is the same as the cooling operation of the first mode, only except that the third four-way switching valve (43) is switched to the second state.

In the cooling operation of this mode, the refrigerant evaporated in the indoor space heat exchanger (53) flows into the third suction pipe (23c) through the first gas-side communicating pipe (101), sequentially passing through the first four-way switching valve (24) and the second four-way switching valve (42). Part of the refrigerant having flowed into the third suction pipe (23c) is suctioned into the third compressor (21c), and the rest of the refrigerant is suctioned into the second compressor (21b) through the second suction pipe (23b) after passing through the third four-way switching valve (43).

Further, it is possible to perform a heating operation by switching only the first four-way switching valve (24) to the second state, from the state of the above cooling operation. In this case, if the outdoor expansion valve (31) is fully closed, the operation will be a first heating operation. If the degree of the opening of the outdoor expansion valve (31) is adjusted as necessary without fully closing the outdoor expansion valve (31), the operation will be a second heating operation.

Further, if the first four-way switching valve (24) and the second four-way switching valve (42) are switched to the second state, and the degree of opening of the outdoor expansion valve (31) is adjusted as necessary without fully closing the outdoor expansion valve (31), then the operation will be a third heating operation.

Here, in the first heating operation, the air-conditioning heat exchanger (53a) provided in the air-conditioning circuit (97) serves as a condenser. The refrigeration heat exchanger (81) and the cooling heat exchanger (53b) which is provided in the cooling circuit (98) serve as evaporators. In the second heating operation, the air-conditioning heat exchanger (53a) serves as a condenser. The external heat exchanger (25), the cooling heat exchanger (53b), and the refrigeration heat exchanger (81) serve as evaporators. In the third heating operation, the air-conditioning heat exchanger (53a) and the external heat exchanger (25) serve as condensers. The refrigeration heat exchanger (81) and the cooling heat exchanger (53b) serve as evaporators.

### -Effects of Embodiment 2-

According to the present Embodiment 2, the plurality of compressors (21a, 21b, 21c) are compressors whose suction pressures are different from one another. Even in such a case, the flow rate of the refrigerant flowing in each of the branch injection pipes (37a, 37b, 37c) after being decompressed by the subcooling pressure-reducing valve (29) can be adjusted for each of the compressors (21a, 21b, 21c) by the flow rate adjusting valves (30a, 30b, 30c). Thus, an appropriate injection to the compressors (21a, 21b, 21c) can be performed.

Further, according to the present Embodiment 2, the refrigerating machine oil can be returned to the compressors (21a, 21b, 21c), while the refrigerant is being injected to the compressors (21a, 21b, 21c) through the injection circuit (40). Because the injection circuit (40) as well can be used as a circuit for returning the refrigerating machine oil, it is not necessary to separately provide a dedicated oil return circuit. Thus, the cost of the refrigerating apparatus can be reduced.

### -Variation of Embodiment 2-

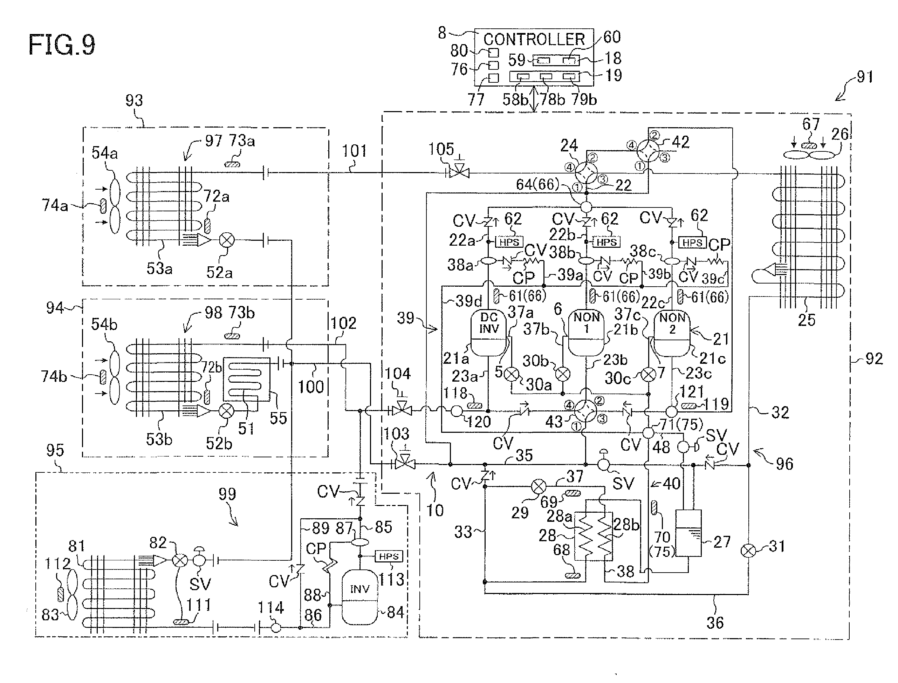

FIG. 9 shows a refrigerant circuit according to a variation of Embodiment 2. The configuration of the controller which controls the operation of the refrigerating apparatus (1) differs between Embodiment 2 and the variation. Further, the second injection pipe (38) of Variation 2 is provided with an intermediate refrigerant temperature sensor (70) for measuring a temperature of the intermediate-pressure refrigerant having passed through the reduced-pressure side flow path (28b) of the subcooling heat exchanger (28), and with an intermediate-pressure pressure sensor (71) for measuring a pressure of the intermediate-pressure refrigerant.

The controller (8) according to this variation of Embodiment 2 includes a third control section (18) and a fourth control section (19). The degree of opening of the subcooling pressure-reducing valve (29) is adjusted by the third control section (18). The degree of opening of the flow rate adjusting mechanism (30a, 30b, 30c) is adjusted by the fourth control section (19).

Further, first and second suction pressure sensors (120, 121) as the low-level pressure detection mechanisms, an intermediate-pressure pressure sensor (71) as the intermediate pressure detection mechanisms, an intermediate refrigerant temperature sensor (70) and an intermediate-pressure pressure sensor (71) as the intermediate superheat detection mechanisms, and a discharge pipe temperature sensor (61) and a discharge pressure sensor (64) as the discharge condition detection mechanisms, are electrically connected to the controller (8). Also, the controller (8) includes a discharge condition setting section (a discharge condition setting mechanism) (76) and an intermediate superheat setting section (an intermediate superheat setting mechanism) (77).

The discharge condition setting section (76) is for setting a target value Tm for the discharge temperatures of the compressors (21a, 21b, 21c). The intermediate superheat setting section (77) is for setting a target value Tgshm for the degree of superheat of the intermediate-pressure refrigerant flowing in the injection circuit (40).

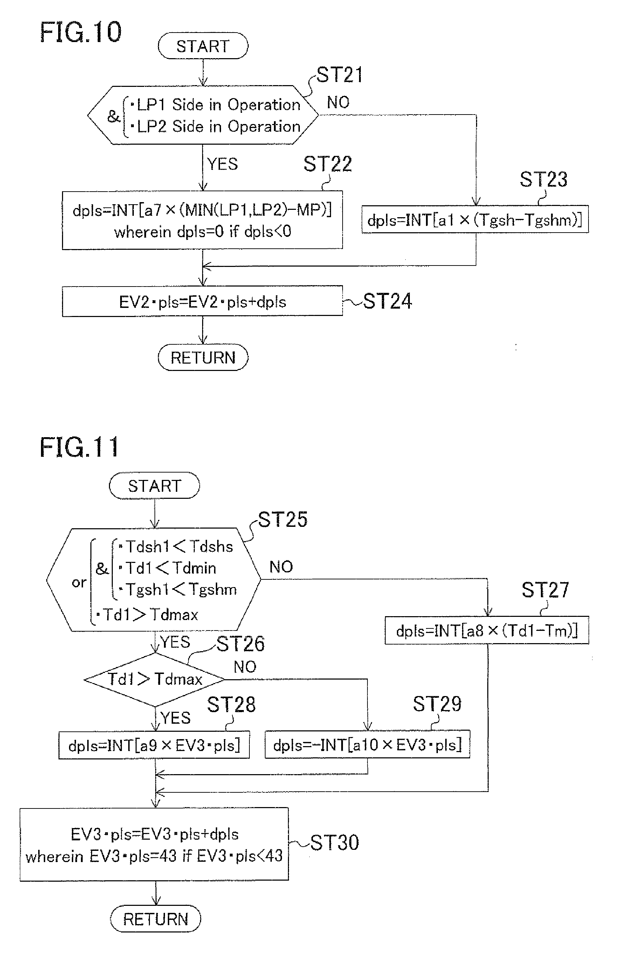

Next, a control operation of the third control section (18) and the fourth control section (19) will be described with reference to FIG. 10 and FIG. 11 showing the control flow diagram.

### <Third Control Section>

The third control section (18) includes the intermediate pressure control section (59) and the intermediate superheat control section (60). The third control section (18) is for exerting control by selecting the intermediate pressure control section (59) or the intermediate superheat control section (60), based on the operating condition of the compressors (21 a, 21b, 21c).

Specifically, first, in step ST21, it is determined whether or not the compressors (21a, 21b) connected to the first low pressure line (102), and the compressor (21c) connected to the second low pressure line (101), as shown in FIG. 10, are activated.

In step ST21, if the compressors (21a, 21b) connected to the first low pressure line (102), and the compressor (21c) connected to the second low pressure line (101) are activated together, the process moves to step ST22. In step ST22, an amount dpls of change in a value of degree of opening of the subcooling pressure-reducing valve (29) is determined based on a difference between a minimum value of the values LP1, LP2 detected by the first and second suction pressure sensors (120, 121) and a value MP detected by the intermediate-pressure pressure sensor (71). The smaller the difference is, the smaller the amount dpls of change becomes. If the amount dpls of change is a negative value, the amount dpls of change is set zero.

Next, in step ST24, a value obtained by adding the amount dpls of change determined in step ST21 to a value EV2-pls of degree of opening of the present subcooling pressure-reducing valve (29) is set as a new value EV2-pls of degree of opening. The degree of opening of the subcooling pressure-reducing valve (29) is changed to this new value EV2-pls of degree of opening.

The processes in step ST22 and step ST24 correspond to the control operation of the intermediate pressure control section (59). Due to this operation, it is possible to make the pressure (intermediate pressure) of the injection circuit (40) higher than the pressures (low-level pressures) of the first and second low pressure lines all the time.

On the other hand, in step ST21, if the compressors (21a, 21b) connected to the first low pressure line (102), or the compressor (21c) connected to the second low pressure line (101) is activated, the process moves to step ST23. In step ST23, an amount dpls of change in a value of degree of opening of the subcooling pressure-reducing valve (29) is determined based on a difference between a value Tgsh of an intermediate refrigerant superheat detected by the intermediate refrigerant temperature sensor (70) and the intermediate-pressure pressure sensor (71), and a target value Tgshm of the intermediate superheat setting section (77). The smaller the difference is, the smaller the amount dpls of change becomes.

Next, in step ST24, a value obtained by adding the amount dpls of change determined in step ST23 to the value EV2-pls of degree of opening of the present subcooling pressure-reducing valve (29) is set as a new value EV2·pls of degree of opening. The degree of opening of the subcooling pressure-reducing valve (29) is changed to this new value EV2·pls of degree of opening.

The processes in step ST23 and step ST24 correspond to the control operation of the intermediate superheat control section (60). Due to this operation, the superheat of the intermediate-pressure refrigerant having flowed out the subcooling heat exchanger (28) can be maintained constant at the target value of the intermediate superheat setting section (77).

As described above, if the compressors (21a, 21b) connected to the first low pressure line (102), and the compressor (21c) connected to the second low pressure line (101) are activated together; the intermediate pressure control is performed by the intermediate pressure control section (59). If the compressors (21a, 21b) connected to the first low pressure line (102), or the compressor (21c) connected to the second low pressure line (101) is activated, the intermediate superheat control is performed by the intermediate superheat control section (60). Thus, as described above, the refrigerant does not flow back from the intermediate port of the compressor (21c) connected to the second low pressure line (101) to the intermediate ports of the compressors (2 1 a, 21 b) connected to the first low pressure line (102).

Further, because the backflow of the refrigerant does not occur as described above in the case where the compressors (21a, 21b) connected to the first low pressure line (102), or the compressor (21c) connected to the second low pressure line (101) is activated, the refrigerant can be injected to each of the compressors (21a, 21b, 21c), while maintaining the superheat of the intermediate-pressure refrigerant in the reduced-pressure side flow path (28b) of the subcooling heat exchanger (28) at an appropriate value.

After the completion of step ST24, the process returns to step ST21, in which it is determined again whether or not the compressors (21a, 21b) connected to the first low pressure line (102), and the compressor (21 c) connected to second low pressure line (101) are activated together. The processes in steps ST21 to ST24 are repeated. Since these two types of control are implemented depending on the situation, a more appropriate injection to the compressors (21a, 21 b, 21c) can be performed, compared to the case where the discharge temperature control is implemented all the time as in Embodiment 2.

### <Fourth Control Section>

The fourth control section (19) includes a second discharge target control section (56b), a second superheat avoidance control section (78b), and a second wet avoidance control section (79b). The fourth control section (19) is for exerting control by selecting any one of the second discharge target control section (56b), the second superheat avoidance control section (78b), and the second wet avoidance control section (79b), based on the discharge temperatures and the discharge superheats of the compressors (21a, 21b, 21c) and based on the superheat of the intermediate-pressure refrigerant in the injection circuit (40). The control operation of the fourth control section (19) is performed for each of the first, second and third flow rate adjusting valves (30a, 30b, 30c). However, only the control of the first flow rate adjusting valve (30a) will be described below.

Specifically, first, in step ST25, whether or not at least one of the eighth condition and the ninth condition is met is determined as shown in FIG. 11. Here, the eighth condition is a condition in which a value Tdsh1 detected as a discharge superheat by the discharge pipe temperature sensor (61) and the discharge pressure sensor (64) is smaller than a predetermined discharge superheat Tdshs; in which a value Td1 detected by the discharge pipe temperature sensor (61) is even smaller than a lower threshold value Tdmin set smaller than the discharge temperature target value Td of the discharge condition setting section (76); and in which a value Tgsh detected as an intermediate refrigerant superheat by the intermediate refrigerant temperature sensor (70) and the intermediate-pressure pressure sensor (71) is smaller than an intermediate superheat target value Tgshm of the intermediate superheat setting section (77).

The eighth condition is for determining whether or not the first compressor (21 a) performs an abnormal wet operation. Here, the predetermined discharge superheat Tdshs is set within a range that does not cause the first compressor (21a) to perform an abnormal wet operation. Further, the lower threshold value Tdmin is set to such a value that causes the first compressor (21a) to perform an abnormal wet operation when the value Td1 detected by the discharge pipe temperature sensor (61) becomes lower than the threshold value Tdmin.

The ninth condition is that the value Td1 detected by the discharge pipe temperature sensor (61) is even larger than an upper threshold value Tdmax set larger than the discharge temperature target value Tm of the discharge condition setting section (76).

The ninth condition is for determining whether or not the first compressor (21a) performs an abnormal superheat operation. Here, the upper threshold value Tdmax is set to such a value that causes the first compressor (21a) to perform an abnormal superheat operation when the value Td1 detected by the discharge pipe temperature sensor (61) exceeds the threshold value Tdmax.

If at least one of the eighth and ninth conditions is met in step ST25, it is determined that the first compressor (21a) performs an abnormal wet operation or an abnormal wet operation, and the process moves to step ST26.

In step ST26, whether or not the ninth condition is met is determined. If the ninth condition is met, the process moves to step ST28. In step ST28, an amount dpls of change in a value of degree of opening of the first flow rate adjusting valve (30a) is determined based on a value EV3·pls of degree of opening of the present first flow rate adjusting valve (30a). Here, if the present value EV3·pls of degree of opening is large, the amount dpls of change is also large. If the present value EV2·pls of degree of opening is small, the amount dpls of change is also small. Next, in step ST30, a value obtained by adding the amount dpls of change determined in step ST28 to the value EV3·pls of degree of opening of the present first flow rate adjusting valve (30a) is set as a new value EV3·pls of degree of opening. As a result, the degree of opening of the subcooling pressure-reducing valve (29) increases.

The processes in step ST28 and step ST30 correspond to the control operation of the second superheat avoidance control section (78b). Due to this operation, the amount of the intermediate-pressure refrigerant flowing into the first compressor (21a) through the intermediate port (5) is increased, and it is possible to prevent the compressors from continuously performing the abnormal superheat operating.

On the other hand, if the ninth condition is not met in step ST26, the process moves to step ST29. In step ST29, an amount dpls of change in a value of degree of opening of the first flow rate adjusting valve (30a) is determined based on a value EV3·pls of degree of opening of the present first flow rate adjusting valve (30a). Here, if the present value EV3·pls of degree of opening is large, the amount dpls of change is also large. If the present value EV2·pls of degree of opening is small, the amount dpls of change is also small. Next, in step ST30, a value obtained by subtracting the amount dpls of change determined in step ST29 from the value EV3·pls of degree of opening of the present first flow rate adjusting valve (30a), is set as a new value EV3·pls of degree of opening. As a result, the degree of opening of the subcooling pressure-reducing valve (29) decreases.

The processes in step ST29 and step ST30 correspond to the control operation of the second wet avoidance control section (79b). Due to this operation, the amount of intermediate-pressure refrigerant flowing into the first compressor (21a) through the intermediate port (5) is reduced, and it is possible to prevent the compressors from contiguously performing an abnormal humidity operating.

On the other hand, if both of the eighth and ninth conditions are not met in step ST25, it is determined that the first compressor (21a) is not performing an abnormal wet operation or an abnormal wet operation, and the process moves to step ST27.

In step ST27, an amount dpls of change in a value of degree of opening of the first flow rate adjusting valve (30a) is determined based on a difference between a value Td1 detected by the discharge pipe temperature sensor (61) and a discharge temperature target value Tm of the discharge condition setting section (76). The smaller the difference is, the smaller the amount dpls of change becomes. Next, in step ST30, a value obtained by adding the amount dpls of change determined in step ST29 to the value EV3·pls of degree of opening of the present first flow rate adjusting valve (30a), is set to a new value EV3·pls of degree of opening. The degree of opening of the first flow rate adjusting valve (30a) is changed to this new value EV2·pls of degree of opening.

The processes in step ST27 and step ST30 correspond to the control operation of the second discharge target control section (56b). Due to this operation, the discharge temperature of the first compressor (21 a) can be maintained constant at the target value of the discharge condition setting section (76).

After the completion of step ST30, the process returns to step ST25, in which the determination process in step ST25 is performed again. The processes in steps ST25 to ST30 are repeated. Since these three types of control are implemented depending on the situation, a more appropriate injection to the compressors (21a, 21b, 21c) can be performed, compared to the case where the discharge temperature control is implemented all the time as in Embodiment 1.

### «Other Embodiment»

The following structures may also be used in the above embodiments.

In the above embodiments, all of the flow rate adjusting mechanisms (30a, 30b, 30c) for adjusting the injection amount of each of the compressors (21a, 21b, 21c) are motor-operated valves. However, the structure is not limited to this, but the flow rate adjusting mechanisms (30a, 30b, 30c) may be solenoid valves capable of being opened or closed. In this case, the injection amount may be adjusted by using the time in which the solenoid valves are held open. That is, to increase the injection amount, the time in which the solenoid valves are held open is extended. On the contrary, to reduce the injection amount, the time in which the solenoid valves are held open is shortened.

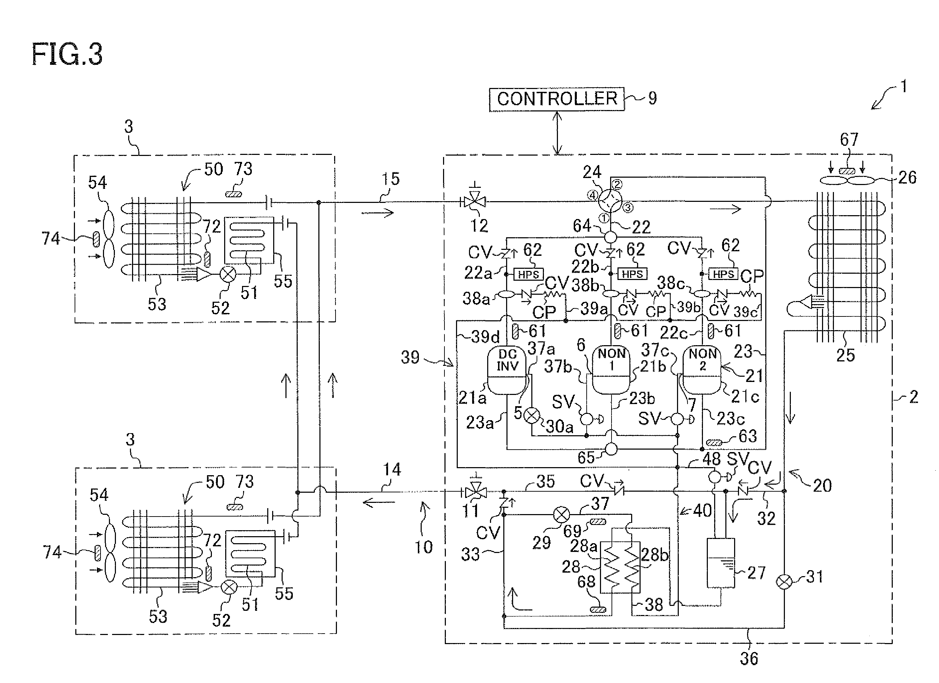

Further, as shown in FIG. 3, the injection amount of the variable displacement first compressor (21a) may be adjusted by a motor-operated valve, and the injection amount of the second and third fixed displacement compressors (21b, 21c) may be adjusted by solenoid valves. In this case, the injection amount of the first compressor (21a) can be accurately adjusted by the motor-operated valve, according to change in operation capacity of the first compressor (21a).

On the other hand, it is not necessary to accurately adjust the injection amount of the second and third compressors (21b, 21c) because the operation capacity of the second and third compressors (21b, 21c) is fixed. Thus, the cost of the refrigerating apparatus can be reduced by using the solenoid valves having a structure simpler than the structure of the motor-operated valve.

In the case where a motor-operated valve and an on/off valve are used as flow rate adjusting mechanisms of the injection circuit as described above, these valves may have different CV values (coefficient of flow value) from each other. For example, if the CV value of the motor-operated valve in the fully-opened state is set larger than the CV value of the on/off valve, it is possible to make the first compressor (21a) have an injection amount larger than the injection amount of the second and third compressors (21b, 21c) when the motor-operated valve is fully open and the solenoid valves are open.

In the above embodiments, the flow rate adjusting mechanisms (30a, 30b, 30c) are provided to all of the branch pipes (37a, 37b, 37c) in the injection circuit (40). However, the structure is not limited to this, but the flow rate adjusting mechanism (30a, 30b, 30c) may be provided only to the branch pipe (37a) of the variable displacement compressor.

The foregoing embodiments are merely preferred examples in nature, and are not intended to limit the scope, applications, and use of the invention.

### INDUSTRIAL APPLICABILITY

As described above, the present invention is useful for a refrigerating apparatus having a plurality of compressors and performing a vapor compression refrigeration cycle.

### DESCRIPTION OF REFERENCE CHARACTERS

- 1: refrigerating apparatus
- 5, 6, 7: intermediate port
- 9: controller (control mechanism)
- 10: refrigerant circuit
- 21a: first compressor (compressor)
- 21b: second compressor (compressor)
- 21 c: third compressor (compressor)
- 28: subcooling heat exchanger
- 29: subcooling pressure-reducing valve (pressure-reducing mechanism)
- 30a: first flow rate adjusting valve (flow rate adjusting mechanism)
- 30b: second flow rate adjusting valve (flow rate adjusting mechanism)
- 30c: third flow rate adjusting valve (flow rate adjusting mechanism)
- 32: first refrigerant pipe (high pressure line)
- 37: first injection pipe (main pipe)
- 38: second injection pipe
- 37a: first branch injection pipe (branch pipe)
- 37b: second branch injection pipe (branch pipe)
- 37c: third branch injection pipe (branch pipe)
- 40: injection circuit

## Claims

1. A refrigerating apparatus comprising: a refrigerant circuit (10) which has a plurality of compressors (21a, 21b, 21c) and which performs a vapor compression refrigeration cycle; an injection circuit (40) which has a main pipe (37) branched from a high pressure line (33) of the refrigerant circuit (10) and branch pipes (37a, 37b, 37c) branched from the main pipe (37), and in which the branch pipes (37a, 37b, 37c) are connected to intermediate ports (5, 6, 7) of the compressors (21a, 21b, 21c), respectively; and a pressure-reducing mechanism (29) provided to the main pipe (37) of the injection circuit (40), wherein
at least one of the plurality of compressors (21a, 21b, 21c) is a variable displacement compressor (21a), and a flow rate adjusting mechanism (30a, 30b, 30c) is provided at least to the branch pipe (37a, 37b, 37c) of the variable displacement compressor (21a).

2. The refrigerating apparatus of claim 1, wherein
the flow rate adjusting mechanism (30a, 30b, 30c) is provided to each of the branch pipes (37a, 37b, 37c) of the injection circuit (40).

3. The refrigerating apparatus of claim 1, comprising
a subcooling heat exchanger (28) having a reduced-pressure side flow path (28b) through which a refrigerant decompressed by the pressure-reducing mechanism (29) flows and a high pressure side flow path (28a) through which a high pressure refrigerant of the refrigerant circuit (10) flows, wherein
the reduced-pressure side flow path (28b) is connected to the main pipe (37) of the injection circuit (40), and the high pressure side flow path (28a) is connected to the high pressure line (33) of the refrigerant circuit (10).

4. The refrigerating apparatus of claim 1, comprising: oil separators (38a, 38b, 38c) respectively provided to discharge pipes (22a, 22b, 22c) of the compressors (21a, 21 b, 21 c), for separating a refrigerating machine oil from a discharge refrigerant discharged from the compressors (21a, 21b, 21c); oil discharge pipes (39a, 39b, 39c) connected to the oil separators (38a, 38b, 38c); and an oil return circuit (39) of which one end side is connected to the oil discharge pipes (39a, 39b, 39c) and of which the other end side is connected to a branch pipe branched from the injection circuit (40), for returning the refrigerating machine oil from the oil discharge pipes (39a, 39b, 39c) to the compressors (21a, 21b, 21c).

5. The refrigerating apparatus of claim 1, wherein
the flow rate adjusting mechanism (30a, 30b, 30c) is a flow rate adjusting valve whose degree of opening is variable.

6. The refrigerating apparatus of claim 1, wherein
the flow rate adjusting mechanism (30a, 30b, 30c) is an on/off valve.

7. The refrigerating apparatus of claim 1, wherein
the plurality of compressors (21a, 21b, 21c) include a variable displacement compressor (21a) and a fixed displacement compressor (21b, 21 c), and
the flow rate adjusting mechanism (30a) provided to the branch pipe (37a) connected to the intermediate port (5) of the variable displacement compressor (21a) is a flow rate adjusting valve whose degree of opening is variable, and the flow rate adjusting mechanism (30b, 30c) provided to the branch pipe (37b, 37c) connected to the intermediate port (6, 7) of the fixed displacement compressor (21b, 21c) is an on/off valve.

8. The refrigerating apparatus of claim 1, comprising
a discharge refrigerant temperature detection mechanism (61) for detecting a temperature of a discharge refrigerant discharged from the compressors (21a, 21b, 21c), and
a control mechanism (9) for adjusting a degree of opening of each of the flow rate adjusting mechanisms (30a,30b, 30c) such that a value detected by the discharge refrigerant temperature detection mechanism (61) falls within a predetermined temperature range.

9. The refrigerating apparatus of claim 3, comprising
a discharge condition detection mechanism (61, 66) for detecting at least one of a discharge temperature and a discharge superheat of each of the compressors (21a, 21b, 21c),
a discharge condition setting mechanism (76) for setting a discharge target value Tm, Tdshm for the at least one of the discharge temperature and the discharge superheat of each of the compressors (21a, 21 b, 21 c),
an intermediate superheat detection mechanism (75) for detecting a superheat of an intermediate-pressure refrigerant having passed through the reduced-pressure side flow path (28b) of the subcooling heat exchanger (28),
an intermediate superheat setting mechanism (77) for setting an intermediate superheat target value Tgshm for the superheat of the intermediate-pressure refrigerant having passed through the reduced-pressure side flow path (28b) of the subcooling heat exchanger (28),
a first discharge target control section (56a) for changing a degree of opening of the pressure-reducing mechanism (29) such that a maximum detection value Ttd, which is a maximum value among values Td detected by the discharge condition detection mechanisms (61, 66) for the respective compressors (21a, 2 1 b, 21c), becomes the discharge target value Tm, Tdshm,
an intermediate superheat control section (60) for changing the degree of opening of the pressure-reducing mechanism (29) such that a value Tgsh detected by the intermediate superheat detection mechanism (75) becomes the intermediate superheat target value Tgshm, and
a first control section (16) for exerting control, if a refrigerant condition value of the refrigerant in the refrigerant circuit (10) is in a predetermined range, by selecting the first discharge target control section (56a) or the intermediate superheat control section (60) based on the refrigerant condition value.

10. The refrigerating apparatus of claim 9, wherein
the first control section (16) is configured to exert control by selecting the first discharge target control section (56a) if the maximum detection value Ttd of the discharge condition detection mechanism (61, 66) is larger than the discharge target value Tm.

11. The refrigerating apparatus of claim 9, wherein
the first control section (16) is configured to exert control by selecting the intermediate superheat control section (60) if the maximum detection value Ttd of the discharge condition detection mechanism (61, 66) is equal to or smaller than the discharge target value Tm.

12. The refrigerating apparatus of claim 9, wherein
the first control section (16) is configured to exert control by selecting the intermediate superheat control section (60) if the maximum detection value Ttd of the discharge condition detection mechanism (61, 66) continues to decrease during a predetermined time t1.

13. The refrigerating apparatus of claim 9, comprising
a first superheat avoidance control section (78a) for having the degree of opening of the pressure-reducing mechanism (29) greater than the present degree of opening of the pressure-reducing mechanism (29),
a first wet avoidance control section (79a) for having the degree of opening of the pressure-reducing mechanism (29) smaller than the present degree of opening of the pressure-reducing mechanism (29), and
an avoidance control section (58) for exerting control, if the refrigerant condition value of the refrigerant in the refrigerant circuit (10) exceeds the predetermined range, by selecting the first superheat avoidance control section (78a) or the first wet avoidance control section (79a) until the refrigerant condition value is in the predetermined range.

14. The refrigerating apparatus of claim 13, wherein
the avoidance control section (58) is configured to exert control by selecting the first superheat avoidance control section (78a) in at least one of the cases where the value Td detected by the discharge condition detection mechanism (61, 66) is even larger than an upper threshold value Tdmax set larger than the discharge target value Tm, and where the value Tgsh detected by the intermediate superheat detection mechanism (75) is even larger than an upper threshold value Tgshmax set larger than the intermediate superheat target value Tgshm.

15. The refrigerating apparatus of claim 13, wherein
the avoidance control section (58) is configured to exert control by selecting the first wet avoidance control section (79a) in at least one of the cases where the value Td detected by the discharge condition detection mechanism (61, 66) is even smaller than a lower threshold value Tdmin set smaller than the discharge target value Tm, and where the value Tgsh detected by the intermediate superheat detection mechanism (75) is even smaller than a lower threshold value Tgshmin set smaller than the intermediate superheat target value Tgshm.

16. The refrigerating apparatus of claim 9, comprising
a second control section (17) for changing a degree of opening of the flow rate adjusting mechanism (30a, 30b, 30c) such that the values Td detected by the discharge condition detection mechanisms (61, 66) for the respective compressors (21a, 21b, 21c) are approximate to each other.

17. The refrigerating apparatus of claim 3, wherein
the plurality of compressors (21a, 21b, 21c) include a first compressor (21a, 21b) and a second compressor (21 c),
a low pressure line of the refrigerant circuit (10) includes a first low pressure line (102) for connecting between a suction side of the first compressor (21a, 21b) and a cooling heat exchanger (53b, 81) which is provided in the refrigerant circuit (10) and which provides cooling for a storage room, and a second low pressure line (101) for connecting between a suction side of the second compressor (21c) and an air-conditioning heat exchanger (53a) which is provided in the refrigerant circuit (10) and which provides air conditioning for an indoor space,
the refrigerating apparatus includes low-level pressure detection mechanisms (120, 121) for detecting a pressure of a low pressure refrigerant flowing in each of the first and second low pressure lines (102, 101), an intermediate pressure detection mechanism (71) for detecting a pressure of an intermediate-pressure refrigerant having been decompressed by the pressure-reducing mechanism (29), an intermediate superheat detection mechanism (75) for detecting a superheat of the intermediate-pressure refrigerant having passed through the reduced-pressure side flow path (28b) of the subcooling heat exchanger (28), and an intermediate superheat setting mechanism (77) for setting an intermediate superheat target value Tgshm for the superheat of the intermediate-pressure refrigerant having passed through the reduced-pressure side flow path (28b) of the subcooling heat exchanger (28), and
the refrigerating apparatus includes
an intermediate pressure control section (59) for changing a degree of opening of the pressure-reducing mechanism (29) such that a value MP detected by the intermediate pressure detection mechanism (71) becomes larger than values LP of the low pressure lines (102, 101) detected by the low-level pressure detection mechanisms (120, 121),
an intermediate superheat control section (60) for changing the degree of opening of the pressure-reducing mechanism (29) such that a value Tgsh detected by the intermediate superheat detection mechanism (75) becomes the intermediate superheat target value Tgshm, and
a third control section (18) for exerting control by selecting the intermediate pressure control section (59) or the intermediate superheat control section (60), based on an operating condition of the plurality of compressors (21a, 21b, 21c).

18. The refrigerating apparatus of claim 17, wherein
the third control section (18) is configured to exert control by selecting the intermediate pressure control section (59) if the first compressor (21a, 21b) and the second compressor (21 c) are activated together.

19. The refrigerating apparatus of claim 17, wherein
the third control section (18) is configured to exert control by selecting the intermediate superheat control section (60) if one of the first compressor (21a, 21b) and the second compressor (21c) is actuated.

20. The refrigerating apparatus of claim 17, comprising
a discharge condition detection mechanism (61, 66) for detecting at least one of a discharge temperature and a discharge superheat of each of the compressors (21 a, 21 b, 21c), and a discharge condition setting mechanism (76) for setting a discharge target value Tm for the at least one of the discharge temperature and the discharge superheat of each of the compressors (21a, 21b, 21c),
a second discharge target control section (56b) for changing a degree of opening of the flow rate adjusting mechanism (30a, 30b, 30c) such that a value Td detected by the discharge condition detection mechanism (61, 66) becomes the discharge target value Tm,
a second superheat avoidance control section (78b) for having the degree of opening of the flow rate adjusting mechanism (30a, 30b, 30c) greater than the present degree of opening of the flow rate adjusting mechanism (30a, 30b, 30c),
a second wet avoidance control section (79b) for having the degree of opening of the flow rate adjusting mechanism (30a, 30b, 30c) smaller than the present degree of opening of the flow rate adjusting mechanism (30a, 30b, 30c),
a fourth control section (19) for exerting control by selecting the second discharge target control section (56b) if a refrigerant condition value of the refrigerant in the refrigerant circuit (10) is in a predetermined range, and selecting the second superheat avoidance control section (78b) or the second wet avoidance control section (79b) if the refrigerant condition value exceeds the predetermined range.

21. The refrigerating apparatus of claim 20, wherein
the fourth control section (19) is configured to exert control by selecting the second superheat avoidance control section (78b) in at least one of the cases where the value Td detected by the discharge condition detection mechanism (61, 66) is even larger than an upper threshold value Tdmax set larger than the discharge target value Tm, or where the value Tgsh detected by the intermediate superheat detection mechanism (75) is even larger than an upper threshold value Tgshmax set larger than the intermediate superheat target value Tgshm.

22. The refrigerating apparatus of claim 20, wherein
the fourth control section (19) is configured to exert control by selecting the second wet avoidance control section (79b) in at least one of the cases where the value Td detected by the discharge condition detection mechanism (61, 66) is even smaller than a lower threshold value Tdmin set smaller than the discharge target value Tm, or where the value Tgsh detected by the intermediate superheat detection mechanism (75) is even smaller than a lower threshold value Tgshmin set smaller than the intermediate superheat target value Tgshm.

23. The refrigerating apparatus of claim 20, wherein
the fourth control section (19) is configured to exert control by selecting the second discharge target control section (56b) if the value Td detected by the discharge condition detection mechanism (61, 66) is equal to or larger than a lower threshold value Tdmin set smaller than the discharge target value Tm, and equal to or smaller than an upper threshold value Tdmax set larger than the discharge target value Tm.
